# EUROPÄISCHE PATENTSCHRIFT

(11) **EP 1 462 895 B1**
(45) Veröffentlichungstag und Bekanntmachung des Hinweises auf die Patenterteilung: **27.04.2011**
(21) Anmeldenummer: 04006517.9
(22) Anmeldetag: 18.03.2004
(51) Int. Cl.: G05B 19/418, B25J 9/16

(54) **Verfahren und Vorrichtung zum Steuern einer Mehrzahl von Handhabungsgeräten**
Method and device for controlling a plurality of manipulators
Procédé et dispositif de commande d'une pluralité de manipulateurs

(30) Priorität: 28.03.2003 DE 10314025
(43) Veröffentlichungstag der Anmeldung: 29.09.2004
(73) Patentinhaber: KUKA Roboter GmbH, 86165 Augsburg (DE)
(72) Erfinder: Kazi, Arif, Dr., 86150 Augsburg (DE); Hietmann, Gerhard, 86405 Herbertshofen (DE); Bunsendal, Jens, 86153 Augsburg (DE); Spiess, Carsten, 86152 Augsburg (DE)
(74) Vertreter: Schlotter, Alexander Carolus Paul

(56) Entgegenhaltungen:
- EP-A- 1 388 396
- WO-A-01/71878
- US-A- 5 978 578
- US-A1- 2001 035 729
- US-A1- 2003 023 333

## Beschreibung

Die Erfindung betrifft ein Verfahren und eine Vorrichtung zum Steuern einer Mehrzahl von Handhabungsgeräten mit einer Anzahl von Steuerungseinheiten, die den Handhabungsgeräten zugeordnet sind, so dass jede Steuerungseinheit mindestens ein Handhabungsgerät steuert.

Zum manuellen Verfahren von Handhabungsgeräten wie Industrierobotern, beispielsweise im Rahmen von Lernprozessen eines Roboters (Teaching), oder beim Ändern von softwaregestützten Steuerprogrammen auf den Handhabungsgeräten zugeordneten Steuerungseinheiten finden heutzutage in der Regel tragbare und somit flexibel einsetzbare Bediengeräte Verwendung. Diese weisen in der Regel Bedien- und Eingabeelemente wie Steuerhebel oder Tasten und darüber hinaus gegebenenfalls Anzeigeelemente auf und sind über Kabel oder drahtlose Kommunikation mit einer Roboter-Steuerungseinheit verbunden.

Pro Steuerungseinheit wird ein derartiges Bediengerät benötigt, so dass in der Regel für jedes Handhabungsgerät ein eigenes Bediengerät eingesetzt wird, da jedes Handhabungsgerät auch eine eigene Steuerung besitzt. Alternativ ist es bekannt, eine gemeinsame Steuerung für mehrere Handhabungsgeräte vorzusehen. Dann ist an der Steuerung nur ein gemeinsames Bediengerät angeschlossen.

Bei der erstgenannten Alternative hat es sich bei Verwendung einer Kabelverbindung zwischen Bediengerät und Steuerungseinheit als nachteilig herausgestellt, dass es aufgrund der Mehrzahl von eingesetzten Bediengeräten zu einem Kreuzen und Verschränken der Kabel kommt und somit eine sichere Zuordnung von Bedien- und Handhabungsgeräten für das Bedienpersonal nicht ohne weiteres möglich ist, insbesondere wenn die Handhabungsgeräte, wie in der Automobilindustrie, eng benachbart stehen.

Aus Sicherheitsgründen besitzen Bediengeräte von Handhabungsgeräten, wie Industrierobotern, regelmäßig einen Zustimmschalter, der im Testbetrieb gedrückt gehalten werden muss, um den betreffenden Roboter verfahren zu können. Bei Anwendungen, bei denen mehrere Handhabungsgeräte miteinander kooperieren, hat es sich als nachteilig herausgestellt, dass in diesem Fall an mehreren Bediengeräten die Zustimmschalter gleichzeitig gedrückt werden müssen, so dass eine derartige Bedienung kooperierender Roboter nur mit mehreren Bedienpersonen möglich ist.

Vorbekannte Steuerungssysteme, bei denen eine Mehrzahl von Robotern an einer gemeinsamen Steuerung angeschlossen sind, vermeiden die vorstehend genannten Nachteile. Allerdings ist hier die Anzahl der bedienbaren Roboter durch die Fähigkeiten der einzelnen Steuerungseinheiten beschränkt.
Überschreitet die Anzahl der Handhabungsgeräte die Zahl der an eine Steuerung anschließbaren, können nicht mehr alle Handhabungsgeräte koordiniert verfahren werden, was die Flexibilität derartiger Systeme im Einsatz beträchtlich einschränkt.

Aus der WO 01/67190 A2 ist ein Steuerungsverfahren und eine industrielle Produktionsanlage bekannt. Dabei wird vorgeschlagen, eine Anlagensteuerung und Applikationskomponenten über ein WEB-Datennetz zu verbinden, in dem die Applikationskomponenten mittels eigenem WEB-Server und eigner Homepage eingebunden sind.

Die DE 101 10 776 A1 betrifft ein Verfahren zur Zuordnung einer mobilen Bedieneinrichtung zu einer Maschine. Hierzu wird in einem Zuordnungs- bzw. Anmeldeprozess mittels drahtlosem Anpeilen, Sendereichweite oder Empfangsempfindlichkeit eine eindeutige Zuordnung der Bedieneinrichtung zu einer bestimmten Maschine erreicht.

Aus der DE 100 58 524 A1 ist es bekannt, echtzeitkritische und nicht echtzeitkritische Daten in demselben Übertragungszyklus zu übertragen, wobei für die echtzeitkritischen und nicht echtzeitkritischen Daten jeweils eigene Bereiche vorgesehen sind.

Der Erfindung liegt die Aufgabe zugrunde, unter Vermeidung der vorstehend genannten Nachteile des Standes der Technik ein Verfahren sowie ein System zum Steuern einer Mehrzahl von Handhabungsgeräten zu schaffen, das ein Bedienen einer beliebigen Anzahl von Handhabungsgeräten ermöglicht, wobei diese Anzahl unabhängig von Fähigkeiten der einzelnen Steuerungseinheiten sein soll und wobei zugleich ein koordiniertes Verfahren mehrerer Handhabungsgeräte wie auch ein gezieltes Beeinflussen einzelner Handhabungsgeräte möglich sein soll.

Die Aufgabe wird durch ein Verfahren gemäß Anspruch 1 bzw. eine Vorrichtung gemäß Anspruch 15 gelöst.

Durch die Erfindung ist eine flexible Steuerung bzw. Bedienung der Handhabungsgeräte gewährleistet. Einer Bedienperson ist es im Zuge des erfindungsgemäßen Verfahrens bzw. im Rahmen der erfindungsgemäßen Vorrichtung bei mehreren Steuerungseinheiten beispielsweise im Testbetrieb möglich, mittels eines Bediengeräts unmittelbaren Einfluss auf Bewegungen eines oder mehrerer Handhabungsgeräte zu nehmen. Nach dem erfindungsgemäßen Verfahren ist vorgesehen, dass an dem Bediengerät für eine Bewegungssteuerung der betreffenden Handhabungsgeräte unmittelbar geeignete Steuersignale (bewegungsrelevante Signale) erzeugt werden.

Nach einer Weiterentwicklung der erfindungsgemäßen Vorrichtung sind die Steuerungseinheiten jeweils in für das Ausführen eines echtzeitfähigen und eines nicht echtzeitfähigen Betriebssystems eingerichtete Bereiche unterteilt, wobei vorzugsweise die echtzeitfähigen Bereiche der Steuerungseinheiten zur Verarbeitung von für eine Bewegungssteuerung der betreffenden Handhabungsgeräte unmittelbar geeigneten Steuersignalen (bewegungsrelevante Steuersignale) ausgebildet sind. In diesem Zusammenhang sieht eine bevorzugte Weiterbildung des erfindungsgemäßen Verfahrens vor, dass die bewegungsrelevanten Steuersignale über eine erste Übertragungseinrichtung an einen Bereich der zugeordneten Steuerungseinheit weitergeleitet werden, der für ein Verarbeiten von bewegungsrelevanten Steuersignalen in Echtzeit ausgebildet ist.

Darüber hinaus sieht eine Weiterbildung der erfindungsgemäßen Vorrichtung vor, dass die nicht echtzeitfähigen Bereiche der Steuerungseinheiten über eine zweite Übertragungseinrichtung verbunden sind. Um eine Mehrzahl von Handhabungsgeräten mit nur einem gemeinsamen Bediengerät steuern zu können, ist in Weiterbildung vorgesehen, dass eine Steuerungseinheit, mit der das Bediengerät physisch oder logisch verbindbar ist, in ihrem nicht echtzeitfähigen Bereich eine Terminaleinrichtung zum Darstellen von Bedienoberflächen verschiedener Steuerungseinheiten aufweist. In einer bevorzugten Weiterbildung besitzt diese Steuerungseinheit darüber hinaus eine Erkennungseinrichtung zum Erkennen der die ausgewählten Handhabungsgeräte steuernden Steuerungseinheit. Weiterhin umfasst die erfindungsgemäße Vorrichtung nach einer bevorzugten Ausgestaltung eine Wegsteuerungseinrichtung, auf die durch die Erkennungseinrichtung einwirkbar ist, so dass die bewegungsrelevanten Steuersignale über die erste Übertragungseinrichtung an die den ausgewählten Handhabungsgeräten zugeordnete Steuerungseinheit weiterleitbar sind. Auf diese Weise ist es möglich, die durch das gemeinsame Bediengerät ausgelösten Steuersignale zielgerichtet an bestimmte Steuerungseinheiten weiterzuleiten. Parallel zu einer Übertragung an die zugeordnete Steuerungseinheit erfolgt in der die Erkennungseinrichtung aufweisenden Steuerungseinheit erfindungsgemäß vorzugsweise ein Weiterleiten der Steuersignale an die Terminaleinrichtung.

Im Zuge einer Weiterbildung des erfindungsgemäßen Verfahrens werden weitere durch das Bediengerät erzeugte, nicht unmittelbar bewegungsrelevante Steuersignale ausschließlich an die Terminaleinrichtung weitergeleitet. Im Rahmen der erfindungsgemäßen Vorrichtung kann weiterhin vorgesehen sein, dass alle Steuersignale zwischen der Terminaleinrichtung und einem Bereich der zugeordneten Steuerungseinheit, der für ein Verarbeiten von Daten in Nicht-Echtzeit ausgebildet ist, wie einer Bedienoberfläche über die zweite Übertragungseinrichtung kommunizierbar sind.

Um einer Bedienperson eine direkte Kontrolle über das zu bedienende Handhabungsgerät zu ermöglichen, ist nach dem erfindungsgemäßen Verfahren weiterhin vorgesehen, dass das Bediengerät die Bedienoberfläche der Steuerungseinheit des ausgewählten Handhabungsgeräts darstellt, wobei die Darstellung vorzugsweise graphisch erfolgt und die Bildinformation standardmäßig in Form von Pixeldaten übertragen wird. Um die Übertragung von Bildinhalten der dem ausgewählten Handhabungsgerät zugeordneten Steuerungseinheit an das Bediengerät möglichst effizient zu gestalten, sehen Weiterentwicklungen des erfindungsgemäßen Verfahrens vor, dass Daten von Bildinhalten der Steuerungen digital übertragen und Bilddaten vor der Übertragung komprimiert werden. Weiterhin können vorzugsweise Standardbildelemente nicht in Pixelform sondern lediglich als Steuerbefehle übertragen und vom Bediengerät selbständig graphisch dargestellt werden.

Um bei Verlust der Verbindung zwischen Bediengerät und Handhabungsgerät bzw. zugeordneter Steuerungseinheit den Roboter stoppen zu können, sieht eine bevorzugte Weiterentwicklung des erfindungsgemäßen Verfahrens vor, dass die Übertragung bewegungsrelevanter Signale über die erste Übertragungseinrichtung durch eine erste Überwachungseinrichtung kontrolliert wird, wobei bei einer Unterbrechung der Übertragung durch die Überwachungseinrichtung ein bewegungsrelevantes z.B. ein bewegungsverhinderndes Steuersignal erzeugt wird. Dieses Steuersignal lässt sich anschließend zum Festsetzen des betreffenden Handhabungsgeräts verwenden.

Zudem ist auszuschließen, dass die am Bediengerät dargestellten Bilddaten von einem ersten Handhabungsgerät bzw. dessen Steuerung stammen, während die erzeugten Steuersignale zu einer anderen Robotersteuerung übertragen werden. Das erfindungsgemäße Verfahren sieht vor, dass Bilddaten und vom Bediengerät erzeugte Steuersignale auf unterschiedlichen Kanälen übertragen werden, wobei jedoch Funktion und Zielort der Kanäle durch eine Überwachungseinrichtung kontrolliert werden. Entsprechend weist die erfindungsgemäße Vorrichtung eine gegenseitige Überwachungseinrichtung auf, die zum Überwachen einer Funktion eines Zielorts der Datenkanäle ausgebildet ist, so dass sichergestellt werden kann, dass beide Kanäle funktionieren und auf derselben Steuerungseinheit enden.

Um einer Bedienperson die Bedienung mehrerer Handhabungsgeräte mit einem Bediengerät zu ermöglichen, sieht eine äußerst bevorzugte Ausgestaltung der erfindungsgemäßen Vorrichtung vor, dass eine eindeutige Zuordnung der dargestellten Bedienoberfläche und der ausgewählten Handhabungsgeräte gegeben ist. Dazu können die Bedienoberfläche und das entsprechende Handhabungsgerät im Wesentlichen identische, optisch wirksame Markierungen aufweisen. Im Rahmen einer weiteren Ausgestaltung der erfindungsgemäßen Vorrichtung ist vorgesehen, dass die Handhabungsgeräte jeweils optisch und/oder akustische Signalgeber aufweisen, die jeweils zum Aussenden eines Signals bei bzw. während einer Auswahl des betreffenden Handhabungsgeräts ausgebildet sind. Dementsprechend ist dann im Zuge des erfindungsgemäßen Verfahrens vorgesehen, dass zum Identifizieren des ausgewählten Handhabungsgeräts eine an dem betreffenden Handhabungsgerät vorhandene, optisch wirksame Markierung am Bediengerät angezeigt wird bzw. dass ein an dem betreffenden Handhabungsgerät vorhandener akustischer und/oder optischer Signalgeber aktiviert wird. Des weiteren kann im Zuge einer alternativen Ausgestaltung des erfindungsgemäßen Verfahrens vorgesehen sein, dass zum Identifizieren des ausgewählten Handhabungsgeräts eine Bezeichnung des Handhabungsgeräts, wie ein Name, am Bediengerät angezeigt wird.

Um die durch eine Bedienperson am Bediengerät vorgenommene Auswahl eines Handhabungsgeräts deutlich erkennbar zu machen, ist weiterhin vorgesehen, dass an den Handhabungsgeräten oder am Bediengerät optische und/oder akustische Signalgeber angeordnet sind, durch die das mit dem Bediengerät verknüpfte Handhabungsgerät durch einen optischen und/oder akustischen Signalgeber angezeigt wird.

Um bei der Verwendung des erfindungsgemäßen Steuersystems eine Mehrzahl von Robotern auch simultan verfahren zu können, müssen die entsprechenden Steuerungsinformationen, wie Drücken einer Zustimmtaste, Betriebsart, anstehender Not-Aus usw. simultan an alle Handhabungsgeräte übertragen werden. Entsprechend ist nach einer weiteren Ausgestaltung vorgesehen, dass die Steuerungseinheiten aller Handhabungsgeräte durch eine Sicherheitsübertragungseinrichtung miteinander verbunden sind.

Weitere Eigenschaften und Vorteile der Erfindung ergeben sich aus den beigefügten Patentansprüchen sowie aus der folgenden Beschreibung von Ausführungsbeispielen anhand von Zeichnungen. Es zeigt:
- Fig. 1: eine schematische Übersichtsdarstellung einer Vorrichtung mit einer ersten Anschlussmög- lichkeit eines gemeinsamen Bediengeräts, bei der es sich nicht um eine Ausführungsform der Erfindung handelt, sondern um ein Beispiel, das das Verständnis der Erfindung erleich- tert;
- Fig. 2: ein Blockschaltbild zur Übersicht über die Architektur einer erfindungsgemäßen Vorrich- tung gemäß der Fig. 1;
- Fig. 3: eine weitere Anschlussmöglichkeit eines ge- meinsamen Bediengeräts an einer Vorrichtung gemäß der Fig. 1, bei der es sich nicht um eine Ausführungsform der Erfindung handelt, sondern um ein Beispiel, das das Verständnis der Erfindung erleichtert;
- Fig. 4: eine der Fig. 1 entsprechende Darstellung bei einer erfindungsgemäßen Vorrichtung mit ge- trennten Datenkanälen;
- Fig. 5: eine schematische Darstellung einer ersten Auswahlmöglichkeit einer bestimmten Steue- rungseinheit durch ein gemeinsames Bedienge- rät;
- Fig. 6: eine schematische Darstellung einer zweiten Auswahlmöglichkeit einer bestimmten Steue- rungseinheit durch ein gemeinsames Bedienge- rät;
- Fig. 7: ein Ablaufdiagramm eines Umschaltvorgangs zwischen zwei bestimmten Steuerungseinheiten;
- Fig. 8: ein Ablaufdiagramm eines Boot-Vorgangs der Steuerungseinheit, an der das gemeinsame Be- diengerät angeschlossen ist;
- Fig. 9: ein Ablaufdiagramm zum Auslösen des Umschalt- vorgangs;
- Fig. 10: ein Ablaufdiagramm des Umschaltvorgangs;
- Fig. 11a, 11b: schematische Darstellungen zur Visualisierung entfernter Geräte, die im Zuge des erfin- dungsgemäßen Verfahrens zum Einsatz kommen;
- Fig. 12: ein Ablaufdiagramm zur Visualisierung; und
- Fig. 13a, 13b: schematische Darstellungen von Zuordnungsmög- lichkeiten zwischen Bedien- und Handhabungs- gerät.

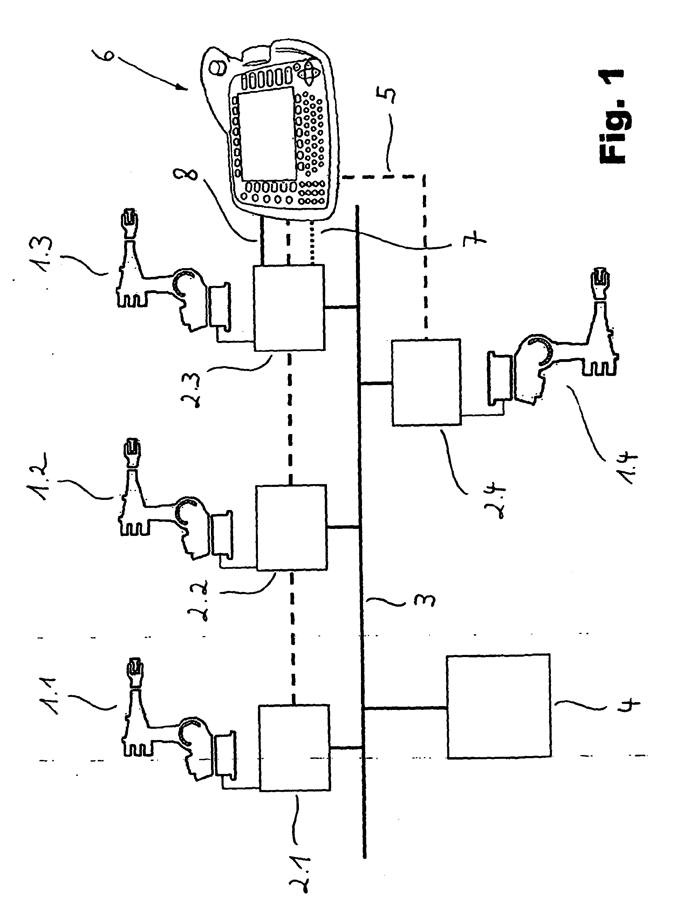

Die Fig. 1 zeigt eine Mehrzahl von Handhabungsgeräten wie Industrieroboter 1.1-1.4, die jeweils an eine zugeordnete Steuerungseinheit 2.1-2.4 zum Steuern des betreffenden Roboters angeschlossen sind. Die Steuerungseinheiten 2.1-2.4 sind untereinander mittels eines echtzeitfähigen Datenbusses 3, z.B. Ethernet, Firewire oder dergleichen zur gezielten Adressierung jeder Einheit verbunden. Ebenfalls an den Datenbus 3 angeschlossen ist beim gezeigten Ausführungsbeispiel ein stationäres Überwachungsgerät 4, beispielsweise ein Leitstand oder Rechner für (Fern-)Wartungszwecke.

Die Steuerungseinheiten 2.1-2.4 sind darüber hinaus über einen zusätzlichen Sicherheitsbus 5 verbunden, über den sicherheitsrelevante Signale simultan an alle angeschlossenen Geräte 2.1-2.4 geschickt werden können.

Weiterhin dargestellt ist in Fig. 1 ein gemeinsames Bediengerät 6, das mit einer beliebigen der Steuerungseinheiten, hier der Einheit 2.3 verbunden ist. Die Steuerungseinheit 2.3 dient dabei als Anschlusspunkt, d.h. sie stellt die Versorgungsspannung, die Datenverbindung, die Bilderzeugung und den Zugang zum Sicherheitsbus 5 zur Verfügung, über den das Bediengerät 6 mit allen Steuerungseinheiten 2.1-2.4 verbunden ist. Über den Sicherheitsbus 5 wirken bestimmte Einstellungen am Bediengerät 6, wie Betriebsart, Not-Aus, Zustimmung, Antriebe Ein-Aus, auf alle weiteren angeschlossenen Steuerungseinheiten 2.1-2.4 bzw. Handhabungsgeräte 1.1-1.4 simultan.

Des Weiteren ist das Bediengerät 6 über einen Datenbus 7 und einen Visualisierungsbus 8 mit der Steuerungseinheit 2.3 verknüpft.

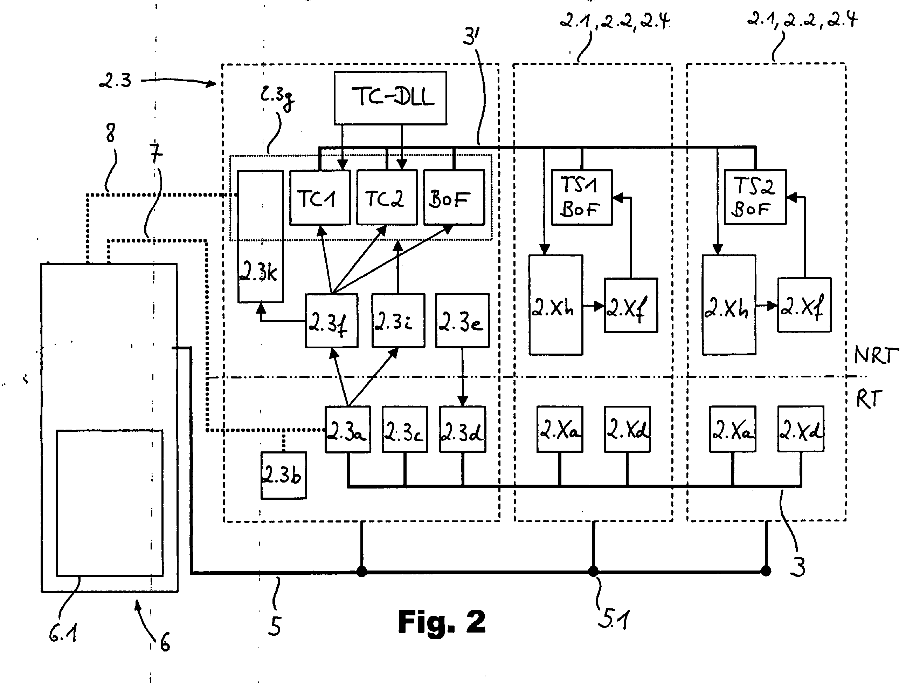

Über den Datenbus 7 werden Eingaben, z.B. Tastendrücke, der Bedienperson am Bediengerät 6 in Echtzeit an die Steuerungseinheit 2.3 übertragen. Zusätzlich wird die Kommunikation durch eine Überwachungseinrichtung (Watchdog; Fig. 2) gesichert: Senden die Steuerungseinheit 2.3 oder das Bediengerät 6 keine Daten mehr, so löst entweder das Bediengerät 6 oder die Steuerungseinheit 2.3 über den Sicherheitsbus 5 einen Bewegungsstop der angeschlossenen Steuerungseinheiten 2.1-2.4 bzw. der Handhabungsgeräte 1.1-1.4 aus.

Die Steuerungseinheit 2.3 nimmt die am Bediengerät 6 erzeugten Steuersignale entgegen und wertet sie in Echtzeit aus. Bewegungsrelevante und damit zeitkritische Steuersignale wie "Start", "Stop" oder Tasten für ein Verfahren von Hand werden dabei mit höherer Priorität bearbeitet als allgemeine, nicht unmittelbar bewegungsrelevante Steuersignale bzw. Bedientasten, um eine schnelle Reaktion der Handhabungsgeräte 1.1-1.4 zu gewährleisten. Zeitkritische Signale entstehen z.B. beim Betätigen spezieller Verfahrtasten am Bediengerät 6, wodurch bewegungsrelevante Steuersignale erzeugt werden. Wird eine solche Verfahrtaste losgelassen, so soll entsprechend ein sofortiger Stillstand des betreffenden Handhabungsgeräts 1.1-1.4 erfolgen. Dagegen sind beispielsweise Visualisierungsdaten nicht zeitkritisch: Erfolgt der Bildaufbau am Bediengerät 6 in gewissem Maße zeitlich verzögert, so hat das auf den Betrieb der Handhabungsgeräte keine negativen Auswirkungen.

Die Steuerungseinheit 2.3 stellt weiterhin eine Verbindung zwischen dem Bediengerät 6 und dem Datenbus 3 her. Eingaben am Bediengerät 6 werden von der Steuerungseinheit 2.3 zielgerichtet zu einer anderen, einem zu bedienenden Handhabungsgerät 1.1-1.4 zugeordneten Steuerungseinheit 2.1, 2.2, 2.4 weitergeleitet. Dabei werden bewegungsrelevante Steuersignale mit höherer Priorität mit einem eigenen Übertragungsprotokoll übertragen, um zum einen die Echtzeitfähigkeit der Übertragung zu garantieren und zum anderen zu verhindern, dass ein Überwachungsgerät 4 ein Handhabungsgerät 1.1-1.4 verfahren kann. Die Verbindungen zwischen Steuerungseinheiten über den Datenbus 3 werden ebenfalls durch eine Überwachungseinrichtung (Watchdog; Fig. 2) gesichert.

Steuersignale mit niedrigerer Priorität, z.B. normale Tasten wie Buchstaben und Zahlen, werden über ein Standardprotokoll, z.B. RDP (Remote Desktop), übertragen. Hierdurch ist garantiert, dass auch ein Überwachungsgerät 4 benutzt werden kann, um Bedienungshandlungen an den Steuerungseinheiten 2.1-2.4 durchzuführen, beispielsweise um diese zu programmieren oder zu konfigurieren. Ein Verfahren der Handhabungsgeräte 1.1-1.4 ist in diesem Fall jedoch unmöglich.

Um auch eine "entfernte" Steuerungseinheit 2.1, 2.2, 2.4, an der das Bediengerät 6 nicht angeschlossen ist, über das Bediengerät 6 bedienen zu können, was Aufgabe und Zweck der vorliegenden Erfindung beinhaltet, muss das Bediengerät 6 auch die entfernte Bedienoberfläche BOF der entfernten Steuerungseinheit anzeigen können. Dies wird durch Steuerungseinheit 2.3 realisiert, d.h. diejenige Steuerungseinheit, an die das Bediengerät 6 angeschlossen ist (vgl. Fig. 2). Alle angeschlossenen Steuerungseinheiten 2.1-2.4 stellen die Darstellung ihrer Bedienoberfläche BOF über ein standardisiertes Protokoll wie RDP dem Datenbus 3 zur Verfügung. Die Steuerungseinheit 2.3 ruft über den Datenbus 3 die entsprechenden Daten ab, insbesondere Bilddaten, wandelt sie um und leitet sie über den Visualisierungsbus 8 an das Bediengerät 6 weiter. Aufgrund der Verwendung eines Standard-Formats wie RDP kann auch das Überwachungsgerät 4 auf die Bedienoberflächen BOF der einzelnen Steuerungseinheiten 2.1-2.4 zugreifen.

Bei den an das Bediengerät 6 zu übertragenden Visualisierungsdaten handelt es sich um Signale mit niedriger Priorität, wie oben beschrieben.

Das allgemeine erfindungsgemäße Konzept zur Signal- und Bilddatenübertragung wird im Folgenden anhand der Fig. 2 näher erläutert.

Die Fig. 2 zeigt gestrichelt drei Steuerungseinheiten gemäß der Fig. 1. Dabei handelt es sich bei der in Fig. 2 links dargestellten Steuerungseinheit 2.3 um diejenige Steuerungseinheit, an die über den Datenbus 3 das gemeinsame Bediengerät 6 angeschlossen ist, wohingegen die beiden anderen Steuerungseinheiten jeweils eine der weiteren Steuerungseinheiten 2.1, 2.2, 2.4 aus Fig. 1 darstellen. Das gemeinsame Bediengerät 6 weist nach der in Fig. 2 gezeigten Ausgestaltung eine Eingabeeinheit 6.1 auf, gegebenenfalls mit einer Tastatur, weiteren Bedien- und Anzeigeelementen.

Der Datenbus 3 dient der Übertragung von Daten mit höherer Priorität, beispielsweise bewegungsrelevanter Steuersignale, während ein zusätzlicher Bus 3' die angesprochene Übertragung von Daten mit niedrigerer Priorität gewährleistet. Die Busse 3, 3' sind, wie in Fig. 2 gezeigt, physisch getrennt ausgebildet.

Wie weiterhin in Fig. 2 dargestellt ist, unterteilen sich die Steuerungseinheiten 2.1-2.4 in jeweils einen Bereich RT (Real Time), der zum Ausführen eines echtzeitfähigen Betriebssystems wie VxWorks, und einen zweiten Bereich NRT (Non Real Time), der zum Ausführen eines nicht-echtzeitfähigen Betriebssystems wie Windows ausgebildet ist.

Zusätzlich weist die Steuerungseinheit 2.3 einen speziellen Treiber 2.3a für das gemeinsame Bediengerät 6 auf. Analog zum Treiber 2.3a der Steuerungseinheit 2.3 umfassen die weiteren Steuerungseinheiten 2.1, 2.2, 2.4 Bediengerät-Emulatoren 2.Xa.

Darüber hinaus umfasst die Steuerungseinheit 2.3 in ihrem RT-Bereich in Verbindung mit dem Datenbus 3 eine Überwachungseinrichtung 2.3b (Watchdog), eine Wegsteuerungseinrichtung 2.3c sowie eine Verarbeitungseinrichtung 2.3d für bewegungsrelevante Steuersignale. In ihrem nicht-echtzeitfähigen Bereich NRT umfasst die Steuerungseinheit 2.3 weiterhin eine Erkennungseinrichtung 2.3e, eine Warteschlange 2.3f für Eingabesignale, beispielsweise Tastatursignale, sowie eine Terminaleinrichtung 2.3g zur Darstellung von eigenen oder entfernten Bedienoberflächen BOF bzw. TC1, TC2.

Die entfernten Steuerungseinheiten 2.1, 2.2, 2.4 umfassen gemäß der Fig. 2 in ihrem RT-Bereich jeweils eine Verarbeitungseinrichtung 2.Xd für bewegungsrelevante Signale sowie in ihrem NRT-Bereich jeweils eine Warteschlange 2.Xf, eine Leseeinrichtung 2.Xh zum Lesen von Eingabesignalen aus dem nicht echtzeitfähigen Bus 3' und Terminalserver-Programmen TS1, TS2 zum Ausführen einer Bedienoberfläche BOF auf der entsprechenden Steuerungseinheit 2.1, 2.2, 2.4.

Weiterhin umfasst die Steuerungseinheit 2.3 eine Umschalteinrichtung 2.3i, die (Tastatur-)Signale von der Warteschlange 2.3f erhält und auf die Terminaleinrichtung 2.3g zur Auswahl eines aktiven Darstellungsbereichs TC1, TC2, BOF einwirkt. Eine weiterhin enthaltene Auswahleinrichtung 2.3k ist direkt mit der Bestätigungseinrichtung 6.3 des Bediengeräts 6 verbunden.

In den Bereichen RT der Steuerungseinheiten 2.1-2.4 erfolgt die Übertragung und Verarbeitung von Echtzeitdaten, wie bewegungsrelevanten Steuersignalen, während in den Bereichen NRT nur solche Daten übertragen bzw. verarbeitet werden, die keine Behandlung in Echtzeit erfordern, beispielsweise Visualisierungsdaten.

Der Treiber 2.3a der Steuerungseinheit 2.3 kommuniziert über ein CAN-Protokoll (Controller Area Network-Protocol) mit dem Bediengerät 6. Im Gegensatz zu bekannten gattungsmäßigen Verfahren bzw. Vorrichtungen werden jedoch die vom Bediengerät 6 erzeugten Steuersignale, z.B. durch Tastendrücke, nicht unmittelbar an den RT-Bereich der Steuerungseinheit 2.3 bzw. der Steuerungseinheiten 2.1-2.4 weitergeleitet, sondern erfindungsgemäß in drei Gruppen unterteilt:

Durch das Bediengerät 6 erzeugte Signale werden vom Treiber 2.3a an die Warteschlange 2.3f im NRT-Bereich der Steuerungseinheit 2.3 übertragen. Die Signale stehen damit im NRT-Bereich allen Programmen zur Verfügung, beispielsweise Terminalclient-Programmen TC1, TC2. Diese dienen der Darstellung entfernter Bedienoberflächen und sind aufgrund ihrer Verknüpfung mit Terminalclient-DLLs TC-DLL (Dynamic Link Libraries) in der Lage, spezielle Steuersignale, z.B. Auswahlsignale für bestimmte Handhabungsgeräte und/oder Steuerungseinheiten, abzufangen und diese über den nicht echtzeitfähigen Bus 3' an die entsprechende entfernte Steuerungseinheit 2.1, 2.2, 2.4 zu übertragen. Wenn ein Terminalclient-Programm Eingabesignale empfängt, so überträgt es diese an den entsprechenden Terminalserver TS1, TS2 auf der entsprechenden Steuerungseinheit 2.1, 2.2, 2.4, auf dem die entsprechende Bedienoberfläche BOF der entfernten Steuerungseinheit 2.1, 2.2, 2.4 läuft.

Werden durch eine Bedienperson am Bediengerät 6 bewegungsrelevante Signale erzeugt, beispielsweise durch Drücken von speziellen Bewegungstasten, so überträgt die Steuerungseinheit 2.3 diese bewegungsrelevanten Signale parallel zur angesprochenen Übertragung in den NRT-Bereich der Steuerungseinheit 2.3 an die Verarbeitungseinrichtung 2.3d, 2.Xd im RT-Bereich der Vorrichtung, d.h. an die Verarbeitungseinrichtung der ausgewählten Steuerung. Die Adressierung der richtigen Verarbeitungseinrichtung 2.3d, 2.Xd erfolgt über die TCP/IP-Adresse der zugehörigen Steuerungseinheit 2.1-2.4. Die Signalverarbeitung im RT-Bereich der Vorrichtung erfolgt in herkömmlicher Weise zur Bewegungssteuerung der Handhabungsgeräte 1.1-1.4 (Fig. 1). Die Übermittlung an die entsprechende Bedienoberfläche BOF der Steuerungseinheit 2.3 bzw. 2.1, 2.2, 2.4 erfolgt über die Warteschlange 2.3f bzw. den Bus 3' und den entsprechenden Terminalserver TS1, TS2.

Die Verarbeitungseinrichtung 2.3d, 2.Xd unterscheidet zwischen der Steuerungseinheit 2.3 bzw. den entfernten Steuerungseinheiten 2.1, 2.2, 2.4: Nur für den Fall, dass die Verarbeitungseinrichtung 2.3d der Steuerungseinheit 2.3 ein bewegungsrelevantes Signal erhält, gibt sie dieses in der oben beschriebenen Weise an den NRT-Bereich der ausgewählten Steuerungseinheit weiter. Die Verarbeitungseinrichtungen 2.Xd der entfernten Steuerungseinheiten 2.1, 2.2, 2.4 leiten dagegen die Signale nicht an den NRT-Bereich der entsprechenden Steuerungseinheit 2.1, 2.2, 2.4 weiter. Auf diese Weise ist ausgeschlossen, dass eine Steuerungseinheit dieselben Steuersignale auf zweierlei Wegen, nämlich über den Terminalserver und die Verarbeitungseinheit erhält, was zu Steuerungskonflikten führen könnte. D.h. in den Steuerungseinheiten 2.1, 2.2, 2.4 findet keine doppelte Signalübertragung zwischen dem RT-Bereich und dem NRT-Bereich der betreffenden Steuerungseinheit statt.

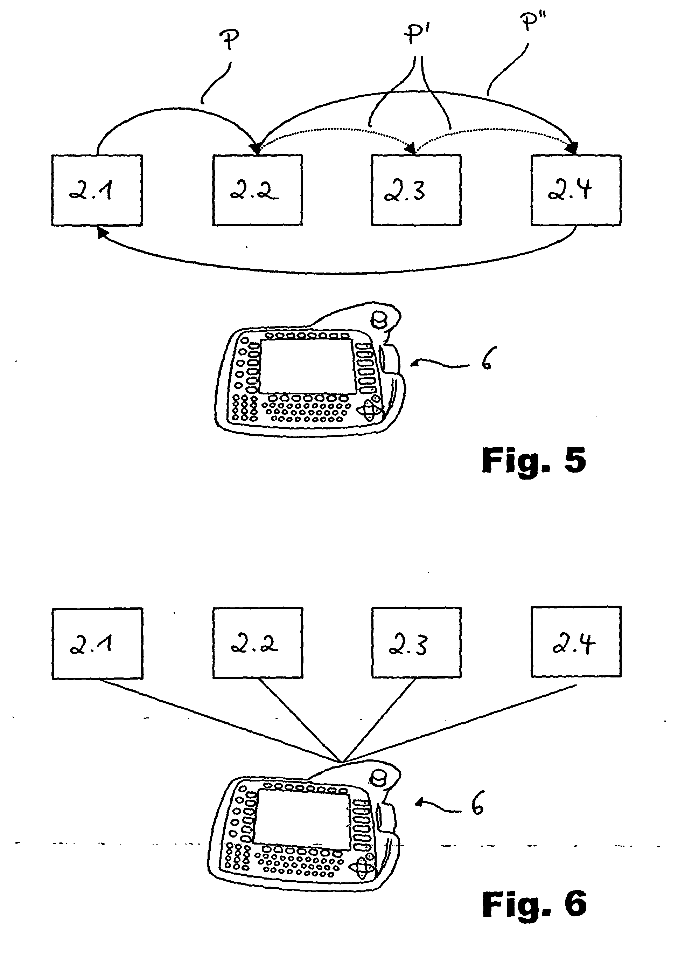

Wenn durch ein Bediengerät 6 ein Auswahl- oder Umschaltsignal erzeugt wird, beispielsweise durch Drücken einer oder mehrerer ausgewählter Tasten, so sendet der Treiber 2.3a ein Signal an die Umschalteinrichtung 2.3i. Diese Einrichtung, die in der Regel software-technisch ausgebildet ist, springt zwischen der lokalen Bedienoberfläche BOF der Steuerung 2.3 und gegebenenfalls weiteren, in der Terminaleinrichtung 2.3g dargestellten Terminalclients TC1, TC2, die den Bedienoberflächen der anderen Steuerungseinheiten 2.1, 2.2, 2.4 darstellen, hin und her (Fig. 5, 6). Wenn die Umschalteinrichtung 2.3i zu einem anderen Terminalclient TC1, TC2 oder der lokalen Bedienoberfläche BOF springt, so gelangt die entsprechende Anwendung in den Fokus des NRT-Betriebssystems der Steuerungseinheit 2.3. Eine solche Fokusverschiebung wird durch die Erkennungseinrichtung 2.3e erkannt, welche den Treiber 2.3a über die Fokusverschiebung informiert und eine IP-Adresse des betreffenden RT-Bereichs der zugeordneten Steuerungseinheit 2.1-2.4 bzw. der entsprechenden Verarbeitungseinrichtung 2.3d, 2.Xd an die Wegsteuerungseinrichtung 2.3c übermittelt. Nach Maßgabe der Wegsteuerungseinrichtung 2.3c "entkoppelt" der Treiber 2.3a vom RT-Bereich der bisher aktiven Steuerungseinheit 2.1-2.4 und wird übermittlungstechnisch mit dem der genannten IP-Adresse entsprechenden RT-Bereich der neu ausgewählten Steuerungseinheit 2.1-2.4 verbunden.

Auf diese Weise kann eine Bedienperson sogar standardisierte Eingabegeräte, wie eine herkömmliche Tastatur oder Maus verwenden, um zwischen den Anwendungen, d.h. den Terminalclients TC1, TC2 und der lokalen Bedienoberfläche BOF hin und her zu springen, ohne dabei Gefahr zu laufen, dass eine bestimmte Bedienoberfläche angezeigt wird, während eine andere Bedienoberfläche bzw. eine andere Steuerungseinheit ausgewählt ist: Das System ist nach Maßgabe durch das aktive Fenster (das im Fokus des NRT-Betriebssystems der Mastersteuerung 2.3 befindliche Anwendungsprogramm TC1, TC2, BOF) synchronisiert und nicht durch einen Tastendruck (Signalerzeugung) am Bediengerät 6.

Im gewöhnlichen Betrieb überprüft jede Steuerungseinheit 2.1-2.4, ob an ihr ein gemeinsames Bediengerät 6 angeschlossen ist, bevor Antriebseinheiten eines zugehörigen Handhabungsgeräts 1.1-1.4 (Fig. 1) freigegeben werden. Da die Steuerungseinheiten 2.1, 2.2, 2.4 nicht direkt mit einem Bediengerät 6 verbunden sind, ist es erforderlich, derartige Sicherheitsvorkehrungen auszuschalten. Diese Aufgabe übernehmen die Bediengerät-Emulatoren 2.Xa der Steuerungseinheiten 2.1, 2.2, 2.4, die die Anwesenheit eines gemeinsamen Bediengeräts 6 an der Steuerungseinheit 2.3 über den Bus 3 erfassen und entsprechende Steuersignale zur Ausschaltung der angesprochenen Schutzvorkehrungen an ihre Steuerungseinheit 2.1, 2.2, 2.4 senden.

Eine Sicherheitsüberwachung der vom Benutzer getätigten Auswahl von Steuerungseinheiten bzw. Handhabungsgeräten wird erfindungsgemäß sowohl hard- als auch software-technisch realisiert. Die Hardware-Komponente umfasst insbesondere den Sicherheitsbus 5.

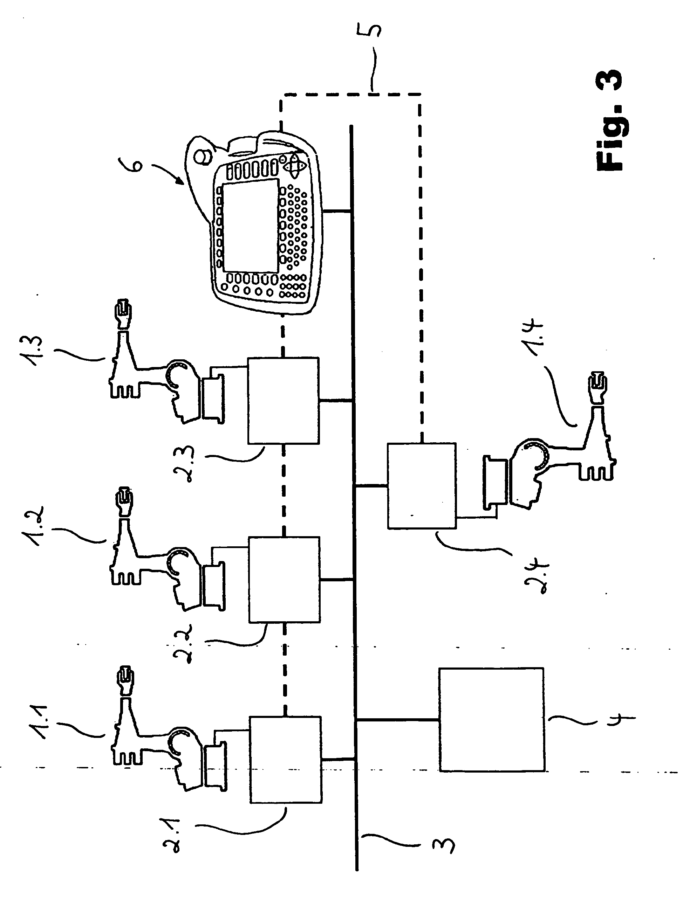

Die Fig. 3 zeigt eine im Wesentlichen der bereits erläuterten Fig. 1 entsprechende Ausgestaltung eines Systems mit Handhabungsgeräten 1.1-1.4 sowie zugeordneten Steuerungseinheiten 2.1-2.4, die über einen Datenbus 3 und einen Sicherheitsbus 5 verbunden sind. Auch hier ist am Datenbus ein stationäres Überwachungsgerät 4 vorgesehen. Im Gegensatz zur Fig. 1 ist beim Ausführungsbeispiel der Fig. 3 ein gemeinsames Bediengerät 6 direkt am Daten- und am Sicherheitsbus 3 bzw. 5 angeschlossen. In diesem Fall greift das Bediengerät 6 über den Bus direkt auf eine der Steuerungseinheiten 2.1-2.4 zu. Eine solche Ausgestaltung setzt ein komplexeres Bediengerät 6 voraus, da dieses die unterschiedlichen Protokolle für die Visualisierung der Terminaleinrichtung der Mastersteuerung und für die Bedienung selbst implementieren muss. Zudem muss das Bediengerät 6 selbständig die direkte Anbindung an den Datenbus 3 realisieren.

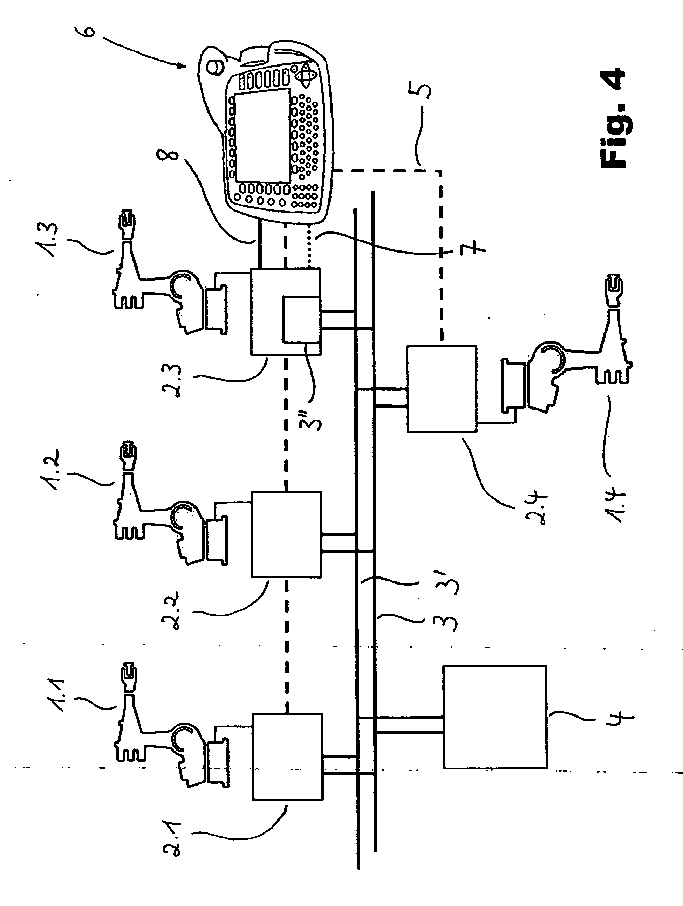

Die in der Fig. 4 dargestellte Ausgestaltung des erfindungsgemäßen Systems entspricht ebenfalls im Wesentlichen dem Ausführungsbeispiel der Fig. 1, jedoch kommunizieren die Steuerungseinheiten 2.1-2.4 ähnlich wie in Fig. 2 über zwei physikalisch getrennte Datenbusse 3, 3', anstatt unter Verwendung zweier verschiedener Protokolle über einen gemeinsamen Datenbus zu kommunizieren. Die Datenbusse 3, 3' trennen zeitkritische, beispielsweise unmittelbar bewegungsrelevante Daten von nicht zeitkritischen Daten somit auch physikalisch und übertragen diese auf getrennten Kanälen. Der Einsatz von zwei getrennten Datenbussen 3, 3' vermeidet somit die softwaremäßige Regelung der Prioritäten beim Datenverkehr über einen Bus.

Darüber hinaus zeigt die Fig. 4 noch eine Überwachungseinrichtung 3'', die zum Überwachen der Funktionsfähigkeit und des Zielortes der getrennten Datenkanäle ausgebildet ist, um sicherzustellen, dass eine Bedienperson auch das Handhabungsgerät bedient, dessen Bedienoberfläche sie sieht.

Die grundlegende Unterscheidung, welche Daten zeitkritisch sind, trifft entweder das Bediengerät 6 (wenn es sich um ein direkt am Bus angeschlossenes Gerät handelt; Fig. 3) oder die Steuerungseinheit 2.3, an der das Bediengerät 6 angeschlossen ist (Fig. 1, 4).

Die Fig. 5 und 6 illustrieren das Auswählen einer bestimmten Steuerungseinheit 2.1-2.4 durch eine Bedienperson mittels des Bediengeräts 6. Dazu drückt die Bedienperson am Bediengerät 6 eine spezielle Taste oder Tastenkombination, wodurch ein Auswahlsignal erzeugt wird. Dieses bewirkt gemäß der Ausgestaltung der Fig. 5, dass die Bedienung von einer aktuellen Steuerungseinheit zur nächsten Steuerungseinheit wechselt (in Fig. 5 durch Pfeile P, P') dargestellt). Der Wechsel ist gleichbedeutend mit einer Fokusänderung in der Terminaleinrichtung 2.3g der Steuerungseinheit 2.3 (vgl. Fig. 2). Einer Bedienperson ist es somit möglich, sehr schnell von einer Steuerungseinheit zur nächsten zu wechseln. Der Wechsel erfolgt intern durch zyklisches Abarbeiten von Listen, so dass um eine Umschaltreihenfolge immer gleich ist. Steht eine der Steuerungseinheiten, wie in Fig. 5 beispielhaft die Einheit 2.3, gerade nicht zur Verfügung, so wird sie bei der Anwahl übersprungen (gestrichelte Linien P') und das Bediengerät greift anhand von Steuerungseinheit 2.1 direkt auf Steuerungseinheit 2.4 zu (durchgezeichneter Pfeil P''). Eine solche Wechseltechnik beschleunigt die Auswahl insbesondere bei kleineren Installationen mit wenigen Steuerungseinheiten.

Die Fig. 6 zeigt in alternativer Ausgestaltung die Auswahl von Steuerungseinheiten durch gezieltes Anwählen. In diesem Fall ruft die Bedienperson über das Bediengerät 6 einen Dialog auf, in dem alle zur Verfügung stehenden Steuerungseinheiten aufgelistet sind. So ist es durch gezielte Auswahl möglich, direkt zu einer bestimmten Einheit zu springen. Dies ist vor allem bei größeren Installationen sinnvoll.

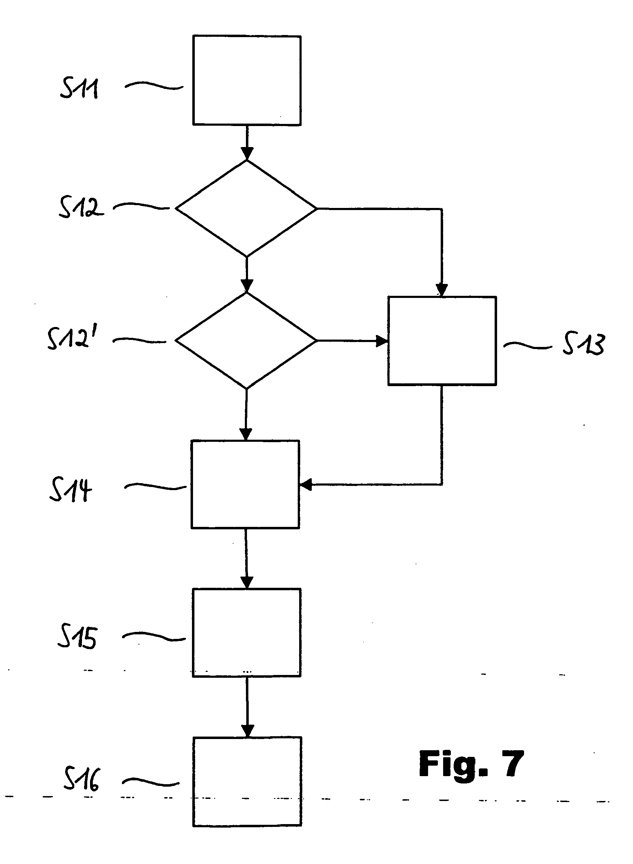

Fig. 7 zeigt ein Ablaufdiagramm eines Umschaltvorgangs zwischen Steuerungseinheiten. Nach einem Einleiten des Umschaltvorgangs in Schritt S11 erfolgt in Schritt S12 eine Abfrage, ob die betreffenden Handhabungsgeräte zur Zeit in einem Automatikmodus verfahren werden. Der Umschaltvorgang ist abhängig von der Betriebsart. So soll beispielsweise im Automatikmodus von Steuerungseinheit zu Steuerungseinheit gewechselt werden können, ohne dass ein Handhabungsgerät gestoppt wird, beispielsweise um Ausgaben eines bestimmten Steuergeräts zu inspizieren. Im Automatikmodus verfahren die Handhabungsgeräte autonom, so dass ein Umschalten zu einer anderen Steuerung nicht zu einem Verlust der Kontrolle führt.

Befindet sich das System nicht im Automatikmodus, so wird das bisherige Handhabungsgerät gestoppt (Schritt S13). Befindet sich die Anlage nicht im Automatikmodus oder ist im Automatikmodus ein Handfahrbetrieb überlagert (Abfrage in Schritt S12'), so ist es möglich, dass eine Bedienerperson gerade ein Handhabungsgerät verfährt und während des Verfahrens umschaltet, so dass die Kontrolle über das betreffende Handhabungsgerät verloren geht, da sich Bedienvorgänge erfindungsgemäß nach dem Umschalten auf eine andere Steuerungseinheit auswirken. Aus diesem Grund muss das per Hand verfahrene Handhabungsgerät vor dem Umschalten unbedingt gestoppt werden (Schritt S13).

Unabhängig von der Betriebsart muss ein Zustand der Eingabeeinrichtungen (Tasten) am Bediengerät vor dem Umschalten zunächst auf "nicht gedrückt" gesetzt werden, um zu verhindern, dass die Anlage gestoppt wird (Schritt S14). Mit dem Drücken einer Taste am Bediengerät wird die Überwachungseinrichtung 2.3b (Watchdog; Fig. 2) aktiviert. Der Watchdog wird deaktiviert, wenn keine Taste am Bediengerät mehr gedrückt ist. Damit der Watchdog beim Umschalten nicht anspricht, muss also zunächst die Information "keine Taste mehr gedrückt" gesendet werden (Schritt S14). Andernfalls reagiert der Watchdog auf das Umschalten wie auf einen Verlust der Verbindung bei anstehenden Steuersignalen. Erst nach dem Abstoppen des Handhabungsgeräts und dem Zurücksetzen des Tastenzustandes kann die Verbindung zu dem betreffenden Handhabungsgerät geschlossen (Schritt S15) und eine Verbindung zu einem anderen Handhabungsgerät hergestellt werden (Schritt S16).

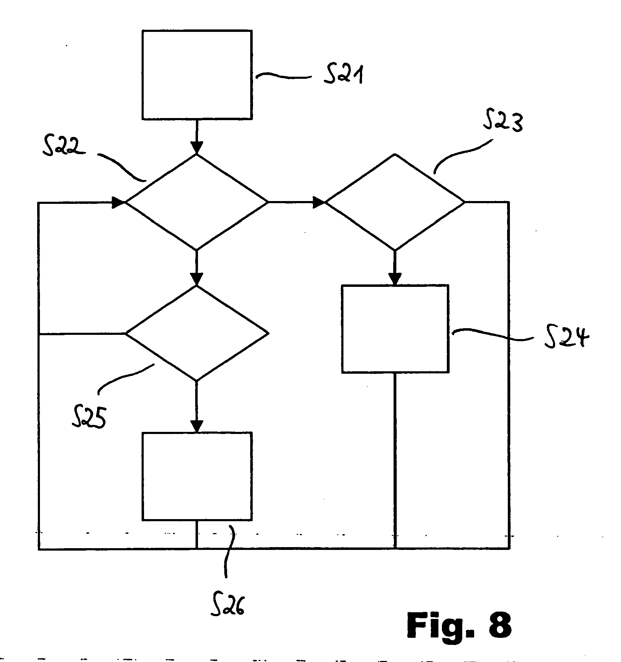

Die Fig. 8 zeigt ein Ablaufdiagramm des Boot-Vorgangs der Steuerungseinheit, an der das gemeinsame Bediengerät angeschlossen ist. Nachdem die betreffende Steuerungseinheit (Fig. 1, 2, 4: Steuerungseinheit 2.3) das Betriebssystem gebootet hat (Schritt S21), versucht sie, Verbindungen zu den anderen Steuerungseinheiten 2.1, 2.2, 2.4 herzustellen. Das geschieht anhand einer gespeicherten Liste, z.B. einer Adressenliste. Die Steuerungseinheit 2.3 arbeitet diese Liste der Reihe nach ab und prüft in Schritt S22, ob eine weitere Steuerungseinheit 2.1, 2.2, 2.4 über den Bus ansprechbar ist. Ist dies der Fall, und existiert noch keine Verbindung zu einer solchen Steuerungseinheit, so wird eine Verbindung aufgebaut und "geparkt" (Schritte S23, S24), d.h. die Verbindung besteht, es werden jedoch keine oder nur wenige Daten ausgetauscht. Ist die entsprechende andere Steuerungseinheit dagegen nicht über den Bus erreichbar, so wird geprüft, ob die Steuerungseinheit zuvor verfügbar war (Schritt S25). In diesem Fall wird in Schritt S26 eine bestehende geparkte Verbindung geschlossen, und die nächste in der Liste verzeichnete Steuerung wird auf Verfügbarkeit überprüft. Anschließend wird der Vorgang mit Schritt S22 beginnend zyklisch wiederholt.

Mit Hilfe dieses Verfahrens können die Steuerungseinheiten in beliebiger Reihenfolge ein- oder ausgeschaltet werden, ohne dass eine Bedienerperson die Möglichkeit verliert, auf eine bestimmte Steuerungseinheit umzuschalten. Auch im Falle von Netzfehlern stehen die Steuerungseinheiten der Bedienperson kurzfristig über das Bediengerät wieder zur Verfügung.

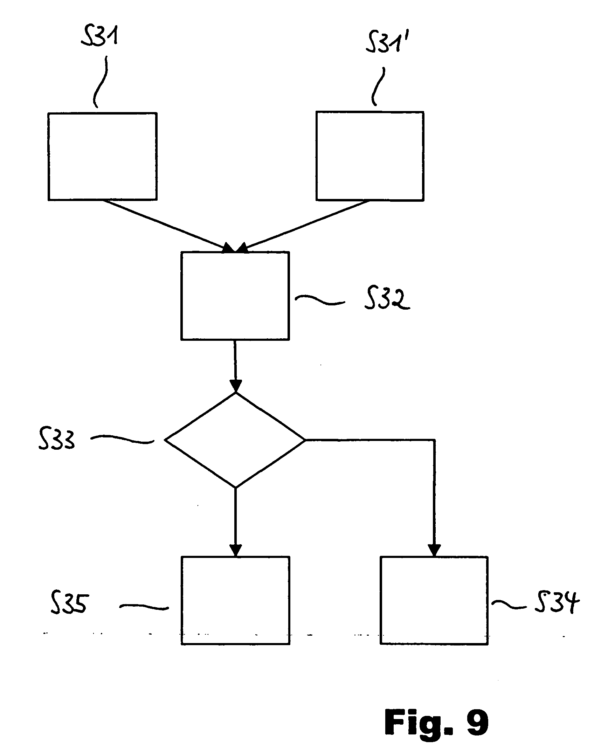

Die Fig. 9 verdeutlicht anhand eines Ablaufdiagramms das Auslösen eines Umschaltvorgangs für den Fall geparkter Verbindungen. Diese sind fest mit einer Anwendung zur Darstellung (Visualisierung) einer entfernten Bedienoberfläche BOF verknüpft (vgl. Fig. 2). Für die entfernte Bedienoberfläche BOF stellt diese Anwendung (Terminaleinrichtung; Fig. 2) ein Fenster im NRT-Bereich der Mastersteuerung zur Verfügung. Für dasjenige Fenster, das gerade den Fokus hat (und unter Windows auf dem Deskop ganz vorne liegt) und deshalb von der Bedienperson an der Mastersteuerung bzw. am Bediengerät gesehen wird, muss die Verbindung aktiviert werden.

Prinzipiell bieten sich der Bedienperson mehrere Möglichkeiten, um die Verbindung zu einer anderen Steuerungseinheit herzustellen: Möglich ist eine sprunghafte oder gezielte Auswahl am Bediengerät (Schritt S31; vgl. Fig. 5, 6) oder das Ausnutzen einer bestimmten (herkömmlichen) Betriebssystemfunktion zum Umschalten auf ein bestimmtes Fenster, z.B. Drücken von "Alt" + "Tab" unter Windows (Schritt S31'). Da auch in letzterem Fall die Umschaltung zu einer anderen Steuerungseinheit funktionieren muss, ist die Umschaltung erfindungsgemäß nicht mit einer speziellen Tastenkombination, sondern mit dem Fokus auf ein bestimmtes Fenster verknüpft, der in Schritt S32 festgestellt wird. Über das fokussierte Fenster prüft die Mastersteuerung zunächst, ob es sich um die Darstellung einer entfernten Bedienoberfläche/Steuerungseinheit handelt (Schritt S33). Ist dies der Fall, und visualisiert dieses Fenster tatsächlich eine andere Steuerungseinheit als das aktuell angezeigte Fenster, so wird in Schritt 35 der Umschaltvorgang ausgelöst. Andernfalls (Schritt 34) bleibt die gegenwärtige Verbindung bestehen.

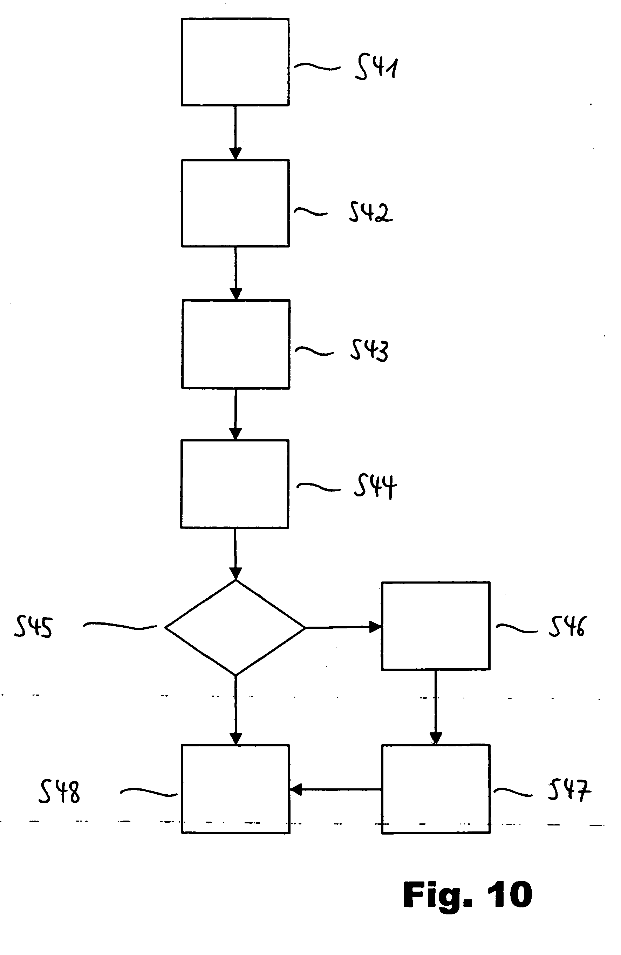

Die Fig. 10 verdeutlicht den Ablauf des eigentlichen Umschaltvorgangs, wobei Schritt S41 an den bereits erläuterten Schritt 35 (Fig. 9) anschließt und zunächst eine Verbindung zu der ausgewählten Steuerungseinheit herstellt. Anschließend wird über den nicht-echtzeitfähigen Datenkanal 3' (Fig. 4) bzw. mittels des entsprechenden Protokolls eine Verbindung zu der entfernten Steuerungseinheit aufgenommen (Schritt S42). Konnte die Verbindung aufgenommen werden (Schritt S43), so wird in Schritt S44 versucht, die Echtzeit-Datenverbindung herzustellen (Datenbus 3; Fig. 4). Anschließend erfolgt in Schritt S45 eine Überprüfung, ob beide Datenverbindungen auf derselben entfernten Steuerungseinheit enden. Hierfür kommen mehrere Verfahren in Betracht:
- Überprüfung anhand von gespeicherten Listen, ob die Zieladressen auf der gleichen Steuerungseinheit enden;
- Senden eines zufällig gewählten Codes auf dem einen Datenkanal, der von der Gegenstelle entgegengenommen und auf dem anderen Datenkanal zurückgesendet wird. Bekommt die ursprünglich sendende Steuerungseinheit ihren Code innerhalb einer kurzen Zeit auf dem anderen Kanal zurück, so sind beide Datenkanäle mit der gleichen Steuerungseinheit verbunden.

Enden die Datenkanäle nicht auf derselben Steuerungseinheit, so werden in Schritt S46 alle Verfahrfunktionen (Funktionen, die auf über den Echtzeit-Datenkanal gesendeten Signale beruhen) gesperrt, und es wird eine Fehlermeldung über den nicht-echtzeitfähigen Datenkanal generiert (Schritt S47). Abschließend wird, wie auch im Falle einer bejahten Abfrage S45, in Schritt S48 die Bedienung freigegeben, um der Bedienperson die Arbeit mit der Steuerungseinheit zu ermöglichen.

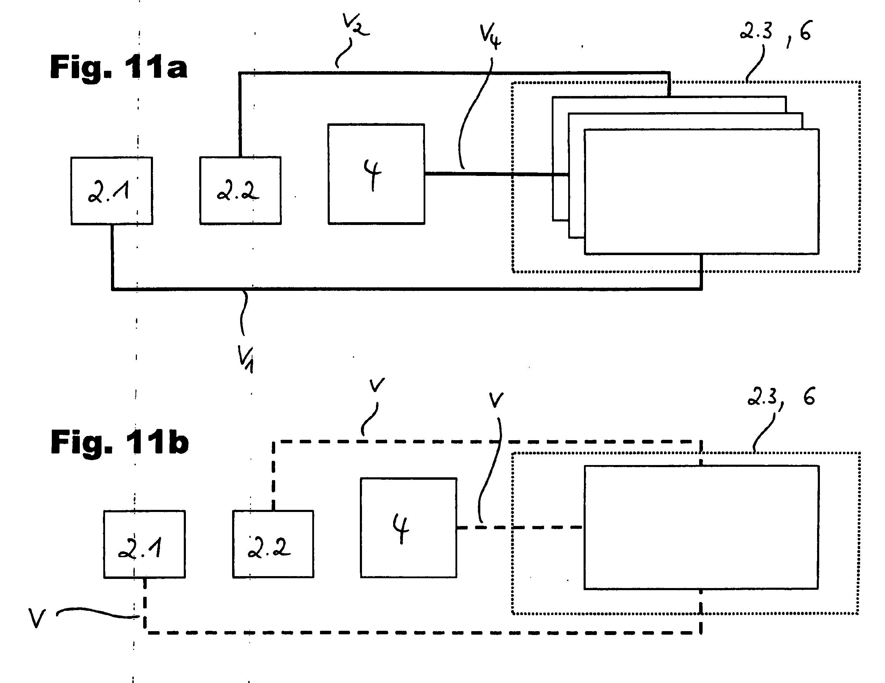

Die Fig. 11a und 11b verdeutlichen die Visualisierung einer entfernten Steuerungseinheit 2.1, 2.2, 2.4 (Fig. 2) durch die Steuerungseinheit 2.3 bzw. das gemeinsame Bediengerät 6. Die Visualisierung erfolgt auf dem Bediengerät 6 bzw. der Terminal-Einrichtung 2.3g der Mastersteuerung 2.3 mit Hilfe eines speziellen Programms, z.B. Microsoft Remote Desktop. Dieses Programm stellt den kompletten Bildschirm bzw. die komplette Bedienoberfläche der entfernten Steuerungseinheit dar und ist unabhängig von der auf der entfernten Einrichtung laufenden Software. Dadurch können verschiedene Geräte bedient werden, solange sie dieses spezielle Programm unterstützen. Prinzipiell sind zum Realisieren der Visualisierung zwei Vorgehensweisen möglich:

In Fig. 11a wird für jede entfernte Steuerungseinheit 2.1, 2.2 eine Verbindung V₁, V₂ über den nicht-echtzeitfähigen Datenbus 3' (Fig. 2) aufgebaut und permanent gehalten, d.h. die entfernten Steuerungseinheiten 2.1, 2.2 stellen sich auf dem Bediengerät 6 bzw. 6.1 und/oder auf der Terminal-Einrichtung 2.3g der Steuerungseinheit 2.3 als ein Stapel von übereinanderliegenden Fenstern dar. Diese Ausgestaltung hat den Vorteil, dass die Umschaltzeiten sehr kurz sind, da zum Umschaltzeitpunkt keine neuen Verbindungen aufgebaut werden müssen. Verbindungen müssen allerdings permanent überwacht werden, um tote Verbindungen, wie sie z.B. durch Abschalten einer entfernten Steuerungseinheit 2.1, 2.2 entstehen, zu erkennen und bei Bedarf im Hintergrund wieder neu aufzubauen.

In der Fig. 11b ist eine alternative Ausgestaltung gezeigt, bei der jeweils nur eine Visualisierungsverbindung V aktuell aufgebaut wird. Beim Umschalten wird die aktuelle Verbindung V abgebaut und eine neue Verbindung V aufgebaut. Diese Variante bedingt längere Umschaltzeiten, kommt jedoch ohne die genannten Verbindungsüberwachungen aus.

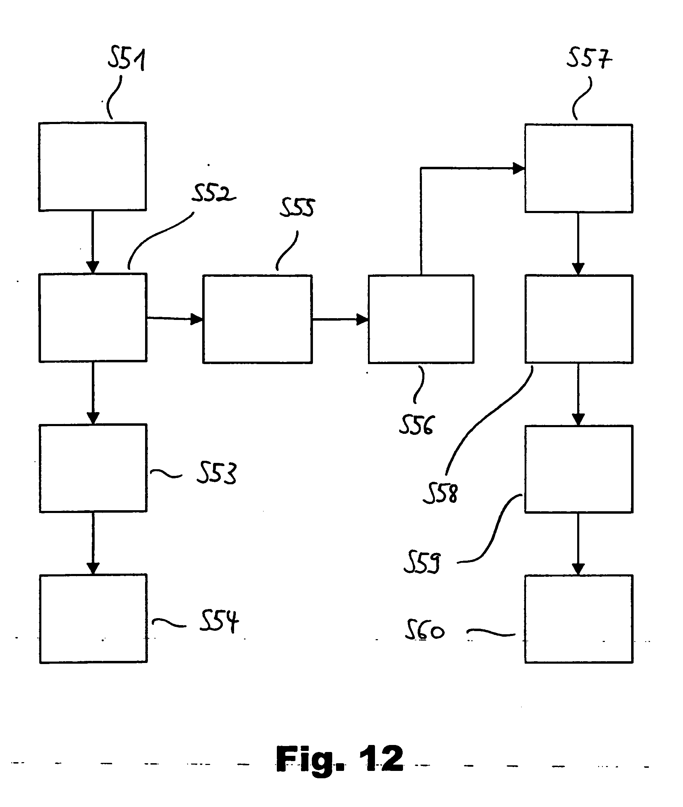

Die Fig. 12 zeigt die bis zur Darstellung auf dem Bediengerät 6 ablaufenden Verarbeitungsschritte für die darzustellenden Bilddaten. Eine beliebige Anwendung, beispielsweise der oben genannte Microsoft Remote Desktop, übergibt Darstellungsbefehle an eine entsprechende Schnittstelle des Betriebssystems, z.B. Windows im Falle des NRT-Bereichs (Fig. 2), einer Steuerungseinheit 2.1-2.4. Bei den Darstellungsbefehlen kann es sich beispielsweise um die graphische Darstellung einer Schaltfläche, einer Linie oder dergleichen handeln. Das Betriebssystem bereitet dieses Kommandos auf, indem es detaillierte Anweisungen an den Graphikkarten-Treiber schickt, hier z.B. Darstellung eines Kästchens, einer Hintergrundfarbe, einer Beschriftung usw. Der Graphikkarten-Treiber wandelt diese Informationen in Pixel-Informationen um und schreibt sie in die Graphikkarte (Schritte S51-S54).

Eine Vielzahl verfügbarer Programme zur Darstellung von entfernten Rechnern (Steuerungseinheiten) greifen Situationen erst auf der Graphiktreiber-Ebene ab (Schritt S53), d.h. es werden sehr viele Pixel-Informationen übertragen, die das Datenvolumen aufblähen und die Datenübertragung verzögern. Bei dem erfindungsgemäßen System werden die Daten dagegen auf der Graphik-Schnittstellenebene des Betriebssystems abgefangen (Schritt S52) und über Ethernet an das Zielsystem (die Mastersteuerung 2.3) übertragen, wobei noch Datenkompressions- und Datendekompressions-Schritte (Schritte S55, S56) zwischengeschaltet sind. Dadurch wird das Datenvolumen drastisch reduziert, da bei gleicher Übertragungsrate pro Zeiteinheit wesentlich mehr Kommandos als Pixel-Informationen übertragen werden. Die Übertragung als Pixel-Informationen ist lediglich noch zur Darstellung von Bildern notwendig. Die Schritte S55 und S56 ermöglichen eine Bedienung des Systems auch über eine langsame Modemverbindung.

Die Gegenstelle (Terminaleinrichtung 2.3g und/oder Bediengerät 6) nimmt die Daten entgegen (Schritt S57), wobei sie gegebenenfalls transformiert werden, wenn z.B. die Farbtiefe oder Auflösung von sendendem und empfangendem System unterschiedlich sind. Anschließend werden die Daten in herkömmlicher Weise über die Betriebssystem-Schnittstelle, den Graphikkarten-Treiber und die Graphikkarte zur Anzeige gebracht (Schritte S58-S60). Es ist damit erfindungsgemäß grundsätzlich möglich, die Steuerungseinheiten ganz ohne Graphikkarten zu betreiben, wenn die Visualisierung komplett vom Bediengerät übernommen wird. Zumindest für Diagnosezwecke sind Graphikkarten in den Steuerungen jedoch weiterhin sinnvoll.

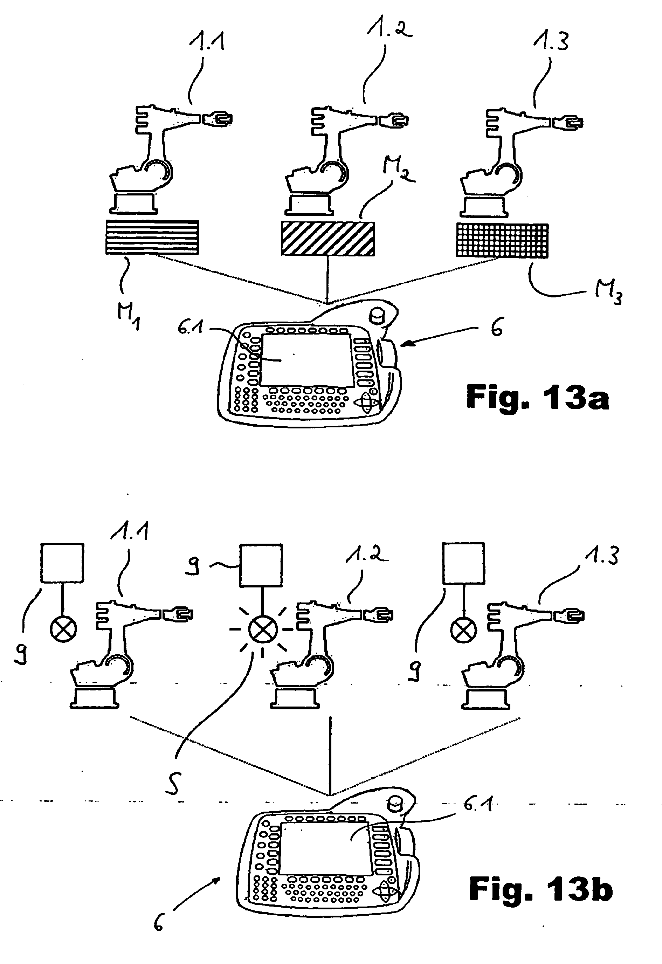

Um eine sichere Bedienung mehrerer Steuerungseinheiten mit einem gemeinsamen Bediengerät zu erlauben, muss es eine für die Bedienperson ersichtliche Zuordnung zwischen Bediengerät und Steuerungseinheit bzw. Handhabungsgerät geben. Dies ist in den Fig. 13a und 13b dargestellt.

Gemäß der Fig. 13a ist jedes Handhabungsgerät optisch wirksam markiert, z.B. durch Anbringen farbiger Streifen. Die Bedienoberfläche, wie sie erfindungsgemäß auf dem gemeinsamen Bediengerät 6 bzw. auf dessen Eingabe- und Anzeigeeinheit 6.1 angezeigt wird, spiegelt die Markierung des Handhabungsgeräts wider, mit dem es momentan verbunden ist. Dies setzt voraus, dass die Markierungen M1, M2, M3 der Handhabungsgeräte 1.1, 1.2, 1.3 auf die Software-Konfiguration der Steuerungseinheit (nicht dargestellt) abgestimmt sind. Statt einer farbigen Markierung kann auch ein beliebiges Symbol benutzt werden, mit dem die auf dem Bediengerät 6 dargestellte Bedienoberfläche hinterlegt wird.

Die Fig. 13b zeigt eine weitere, zusätzlich oder alternativ einsetzbare Identifikationsmöglichkeit für Handhabungsgeräte 1.1-1.3. Jedes Handhabungsgerät 1.1-1.3 besitzt einen Signalgeber S, beispielsweise eine Lampe oder ein LED-Band.

Wählt die Bedienperson am Bediengerät 6 eine Steuerungseinheit (nicht dargestellt) an, so leuchtet der entsprechende Signalgeber S. Es kann sich bei dem Signalgeber S jedoch auch um einen akustischen Signalgeber oder einen kombinierten akustisch-optischen Signalgeber handeln. Eine derartige Ausgestaltung hat den Vorteil, dass kein Gerät auf eine extern angebracht Markierung abgestimmt werden muss, so dass eine Fehlkonfiguration weitgehend ausgeschlossen ist.

### Bezugszeichenliste

- 1.1-1.4: Handhabungsgerät (Roboter)
- 2.1-2.4: Steuerungseinheit
- 2.3: Mastersteuerung
- 2.3a: Treibereinrichtung
- 2.3b: Überwachungseinrichtung (Watchdog)
- 2.3c: Wegsteuerungseinrichtung
- 2.3d: Verarbeitungseinrichtung
- 2.3e: Erkennungseinrichtung
- 2.3f: Warteschlangeneinrichtung
- 2.3g: Terminal-Einrichtung
- 2.3i: Umschalt-Einrichtung
- 2.3k: Auswahleinrichtung
- 2.Xh: Leseeinrichtung
- 3, 3': Datenbus (echtzeitfähig, nicht echtzeitfä- hig)
- 3": Überwachungseinrichtung
- 4: Überwachungsgerät
- 5, 5': Sicherheitsbus
- 5.1: Knoten
- 6: Bediengerät
- 6.1: Bedien-/Anzeigeeinheit
- 6.2: Zwischenplatine
- 6.3: Bestätigungseinrichtung
- 7: Datenbus
- 8: Visualisierungsbus
- 9: Überwachungseinrichtung
- BOF: Bedienoberfläche
- M₁, M₂, M₃: Markierung
- NRT: nicht echtzeitfähiger Bereich
- P, P', P": Steuerungswechsel
- RT: echtzeitfähiger Bereich
- S: Signalgeber
- TC1, TC2: Terminalclient
- TS1, TS2: Terminalserver
- V, V₁, V₂, V₄: Visualisierungsverbindung

## Patentansprüche

1. Verfahren zum Steuern einer Mehrzahl von Handhabungsgeräten mit einer Anzahl von Steuerungseinheiten, die den Handhabungsgeräten zugeordnet sind, so dass jede Steuerungseinheit mindestens ein Handhabungsgerät steuert, wobei ein Bediengerät auf mehrere Steuerungseinheiten zur Steuerung der Handhabungsgeräte zugreift; wobei das Bediengerät für eine Bewegungssteuerung der betreffenden Handhabungsgeräte unmittelbar geeignete bewegungsrelevante Steuersignale erzeugt; wobei durch das Bediengerät eine Bedienoberfläche einer Steuerungseinheit eines ausgewählten Handhabungsgeräts dargestellt wird, **dadurch gekennzeichnet, dass** Bildinhaltsdaten und die vom Bediengerät erzeugten Steuersignale auf unterschiedlichen Kanälen übertragen werden, wobei Funktion und Zielort der Kanäle durch eine Überwachungseinrichtung kontrolliert werden.

2. Verfahren nach Anspruch 1, **dadurch gekennzeichnet, dass** die bewegungsrelevanten Steuersignale über eine erste Übertragungseinrichtung an einen Bereich der zugeordneten Steuerungseinheit weitergeleitet werden, der für ein Verarbeiten von bewegungsrelevanten Steuersignalen in Echtzeit ausgebildet ist.

3. Verfahren nach einem der Ansprüche 1 bis 2, **dadurch gekennzeichnet, dass** das Bediengerät weitere, nicht unmittelbar bewegungsrelevante Steuersignale erzeugt.

4. Verfahren nach Anspruch 3, **dadurch gekennzeichnet, dass** die weiteren Signale ausschließlich an eine in einem nicht echtzeitfähigen Bereich einer Steuerungseinheit vorhandene, zum Darstellen von Bedienoberflächen verschiedener Steuerungseinheiten ausgebildete Terminaleinrichtung weitergeleitet werden.

5. Verfahren nach einem der Ansprüche 3 bis 4, **dadurch gekennzeichnet, dass** die weiteren Steuersignale über eine zweite Übertragungseinrichtung an einen Bereich der zugeordneten Steuerungseinheit weitergeleitet werden, der für ein Verarbeiten von Daten in Nicht-Echtzeit ausgebildet ist.

6. Verfahren nach Anspruch 1, **dadurch gekennzeichnet, dass** die Darstellung graphisch erfolgt, wobei zum Identifizieren ausgewählter Handhabungsgeräte eine Bezeichnung der Handhabungsgeräte am Bediengerät angezeigt wird oder zum Identifizieren der ausgewählten Handhabungsgeräte eine an dem betreffenden Handhabungsgerät vorhandene, optisch wirksame Markierung am Bediengerät angezeigt wird.

7. Verfahren nach Anspruch 6, **dadurch gekennzeichnet, dass** zum Identifizieren der ausgewählten Handhabungsgeräte ein an dem betreffenden Handhabungsgerät vorhandener akustischer und/oder optischer Signalgeber aktiviert wird.

8. Verfahren nach einem der Ansprüche 6 bis 7, **dadurch gekennzeichnet, dass** Bildinhalte der den ausgewählten Handhabungsgeräten zugeordneten Steuerungseinheit digital an das Bediengerät übertragen werden.

9. Verfahren nach Anspruch 8, **dadurch gekennzeichnet, dass** Daten der Bildinhalte vor der Übertragung komprimiert werden.

10. Verfahren nach Anspruch 8 oder 9, **dadurch gekennzeichnet, dass** Standardbildelemente als Steuerbefehle übertragen und vom Bediengerät selbständig dargestellt werden.

11. Verfahren nach einem der Ansprüche 6 bis 10, **dadurch gekennzeichnet, dass** Bildinhalte als Pixeldaten übertragen werden.

12. Verfahren nach einem der Ansprüche 1 bis 11, **dadurch gekennzeichnet, dass** die Übertragung bewegungsrelevanter Signale über die erste Übertragungseinrichtung durch eine erste Überwachungseinrichtung kontrolliert wird, wobei bei einer Unterbrechung der Übertragung durch die Überwachungseinrichtung ein bewegungsrelevantes Steuersignal erzeugt wird.

13. Verfahren nach einem der Ansprüche 1 bis 12, **dadurch gekennzeichnet, dass** das über die ausgewählte Steuerungseinheit mit dem Bediengerät verknüpfte Handhabungsgerät durch einen optischen und/oder akustischen Signalgeber angezeigt wird.

14. Verfahren nach Anspruch 13, **dadurch gekennzeichnet, dass** der Signalgeber bezüglich seiner Funktionsfähigkeit durch eine Überwachungseinrichtung überwacht wird.

15. Vorrichtung zum Steuern einer Mehrzahl von Handhabungsgeräten, mit einer Anzahl von Steuerungseinheiten, die den Handhabungsgeräten zugeordnet sind, so dass jede Steuerungseinheit mindestens ein Handhabungsgerät steuert, und mit einem gemeinsamen, mit zumindest einer bestimmten Steuerungseinheit verbindbaren Bediengerät (6) zum Bedienen der Handhabungsgeräte (1.1, 1.2, 1.3, 1.4), wobei das Bediengerät (6) zum Erzeugen für eine Bewegungssteuerung der betreffenden Handhabungsgeräte unmittelbar geeignete bewegungsrelevante Steuersignale ausgebildet ist und eine Anzeigeeinrichtung (6.1) zum Darstellen von Bedienoberflächen. (BOF) verschiedener Steuerungseinheiten (2.1-.2.4) aufweist, **dadurch gekennzeichnet, dass** Darstellungs- und Steuersignale zwischen den Steuerungseinheiten (2.1-2.4) und dem Bediengerät (6) auf getrennten Datenkanälen übertragbar sind, und **gekennzeichnet durch** eine Überwachungseinrichtung (3"), die zum Überwachen einer Funktion und eines Zielortes der Datenkanäle ausgebildet ist.

16. Vorrichtung nach Anspruch 15, **dadurch gekennzeichnet, dass** die Steuerungseinheiten (2.1, 2.2, 2.3, 2.4) jeweils in für das Ausführen eines echtzeitfähigen und eines nicht echtzeitfähigen Betriebssystems eingerichtete Bereiche (RT bzw. NRT) unterteilt sind.

17. Vorrichtung nach Anspruch 16, **dadurch gekennzeichnet, dass** die echtzeitfähigen Bereiche (RT) der Steuerungseinheiten (2.1-2.4) zur Verarbeitung von für eine Bewegungssteuerung der betreffenden Handhabungsgeräte (1.1-1.4) unmittelbar geeigneten bewegungsrelevanten Steuersignalen ausgebildet sind.

18. Vorrichtung nach Anspruch 17, **dadurch gekennzeichnet, dass** die echtzeitfähigen Bereiche (RT) der Steuerungseinheiten (2.1-2.4) über eine erste Übertragungseinrichtung (3) und die nicht echtzeitfähigen Bereiche (NRT) der Steuerungseinheiten (2.1-2.4) über eine zweite Übertragungseinrichtung (3') verbunden sind.

19. Vorrichtung nach einem der Ansprüche 15 bis 18, **dadurch gekennzeichnet, dass** zumindest eine Steuerungseinheit (2.3) in ihrem nicht echtzeitfähigen Bereich (NRT) eine Terminaleinrichtung (2.3g) zum Darstellen von Bedienoberflächen (BOF) verschiedener Steuerungseinheiten (2.1, 2.2, 2.3, 2.4) aufweist.

20. Vorrichtung nach einem der Ansprüche 15 bis 19, **dadurch gekennzeichnet, dass** zumindest eine Steuerungseinheit (2.3) eine Erkennungseinrichtung (2.3e) zum Erkennen einer die ausgewählten Handhabungsgeräte (1.1-1.4) steuernden Steuerungseinheit (2.1-2.4) aufweist.

21. Vorrichtung nach Anspruch 20, **dadurch gekennzeichnet, dass** die Erkennungseinrichtung (2.3e) aufweisende Steuerungseinheit (2.3) eine Wegsteuerungseinrichtung (2.3c) aufweist, auf die durch die Erkennungseinrichtung (2.3e) einwirkbar ist, so dass die bewegungsrelevanten Steuersignale über die erste Übertragungseinrichtung (3) an die den ausgewählten Handhabungsgeräten (1.1-1.4) zugeordnete Steuerungseinheit (2.1-2.4) weiterleitbar sind.

22. Vorrichtung nach Anspruch 19 und 21, **dadurch gekennzeichnet, dass** die bewegungsrelevanten Steuersignale parallel zu einer Übertragung an die zugeordnete Steuerungseinheit (2.1-2.4) an die Terminaleinrichtung (2.3g) weiterleitbar sind.

23. Vorrichtung nach Anspruch 19, **dadurch gekennzeichnet, dass** weitere vom Bediengerät (6) erzeugte, nicht unmittelbar bewegungsrelevante Steuersignale ausschließlich an die Terminaleinrichtung (2.3g) weiterleitbar sind.

24. Vorrichtung nach Anspruch 18 und 19, **dadurch gekennzeichnet, dass** alle Steuersignale zwischen der Terminaleinrichtung (2.3g) und einer Bedienoberfläche (BOF) der zugeordneten Steuerungseinheit (2.1-2.4) über die zweite Übertragungseinrichtung (3') kommunizierbar sind.

25. Vorrichtung nach Anspruch 15, **dadurch gekennzeichnet, dass** das Bediengerät (6) zum Visualisieren von Bedienoberflächen (BOF) verschiedener Steuerungseinheiten (2.1-2.4) ausgebildet ist.

26. Vorrichtung nach Anspruch 15, **gekennzeichnet durch** eine eindeutige Zuordnung zwischen dargestellter Bedienoberfläche (BOF) und einem ausgewählten Handhabungsgerät (1.1-1.4).

27. Vorrichtung nach Anspruch 26, **dadurch gekennzeichnet, dass** die dargestellte Bedienoberfläche (BOF) zum Handhabungsgerät (1.1-1.4) im Wesentlichen identische, optisch wirksame Markierungen (M₁, M₂, M₃) aufweist.

28. Vorrichtung nach einem der Ansprüche 15 bis 27, **gekennzeichnet durch** eine die Steuerungseinheiten (2.1-2.4) aller Handhabungsgeräte (1.1-1.4) miteinander verbindende Sicherheitsübertragungseinrichtung (5).

29. Vorrichtung nach einem der Ansprüche 15 bis 28, **dadurch gekennzeichnet, dass** die vom Bediengerät (6) erzeugten Steuersignale nur nach Bestätigung an die zugeordnete Steuerungseinheit (2.1-2.4) weiterleitbar sind.

## Claims

1. Method for controlling a plurality of manipulators with a number of control units assigned to the manipulators, such that each control unit controls at least one manipulator, an operating device accessing several control units for controlling the manipulators; the operating device generating motion-relevant control signals which are immediately suited for a motion control of the respective manipulators; an operating surface of a control unit of a selected manipulator being displayed by the operating device, **characterised in that** image content data and the control signals generated by the operating device are transmitted on different channels, the function and the target location of the channels being controlled by a monitoring device.

2. Method according to claim 1, **characterised in that** the motion-relevant control signals are transferred via the first transmitting device to an area of the assigned control unit which is designed for processing motion-relevant control signals in real-time.

3. Method according to one of claims 1 to 2, **characterised in that** the operating device generates additional, not immediately motion-relevant control signals.

4. Method according to claim 3, **characterised in that** the additional signals are exclusively transferred to a terminal device existing in a non real-time capable area of a control unit and being designed for displaying operating surfaces of different control units.

5. Method according to one of claims 3 to 4, **characterised in that** the additional control signals are transferred via a second transmitting device to an area of the assigned control unit which is designed for processing data in non real-time.

6. Method according to claim 1, **characterised in that** the displaying is done in a graphical way, an identifier of the manipulators being displayed at the operating device for identifying selected manipulators, or an optically effective marking existing at the respective manipulator is displayed at the operating device for identifying the selected manipulators.

7. Method according to claim 6, **characterised in that** an acoustical and/or optical signalling device existing at the respective manipulator is activated for identifying the selected manipulators.

8. Method according to one of claims 6 to 7, **characterised in that** the image contents of the control unit assigned to the selected manipulators is digitally transmitted to the operating device.

9. Method according to claim 8, **characterised in that** data of image contents are compressed before the transmission.

10. Method according to claim 8 or 9, **characterised in that** standard image elements are transmitted as control commands and are autonomously displayed by the operating device.

11. Method according to one of claims 6 to 10, **characterised in that** image contents are transmitted as pixel data.

12. Method according to one of claims 1 to 11, **characterised in that** the transmission of motion-relevant signals via the first transmission device is controlled by a first monitoring device, a motion-relevant control signal being generated by the monitoring device in the case of a disruption of the transmission.

13. Method according to one of claims 1 to 12, **characterised in that** the manipulator connected to the operating device via the selected control unit is displayed by an optical and/or acoustical signalling device.

14. Method according to claim 13, **characterised in that** the signalling device is monitored by a monitoring device with respect to its operativeness.

15. Apparatus for controlling a plurality of manipulators, with a number of control units assigned to the manipulators so that each control unit controls at least one manipulator, and with a common operating device (6) which is connectable to at least one certain control unit for operating the manipulators (1.1, 1.2, 1.3, 1.4), the operating device (6) being designed for generating motion-relevant control signals which are immediately suited for a motion control of the respective manipulators and having a display device (6.1) for displaying operating surfaces (BOF) of different control units (2.1-2.4), **characterised in that** display and control signals are transmissible between the control units (2.1-2.4) and the operating device (6) on separate data channels, and **characterised by** a monitoring device (3") which is designed for monitoring a function and a target location of the data channels.

16. Apparatus according to claim 15, **characterised in that** each of the control units (2.1, 2.2, 2.3, 2.4) is divided into areas (RT and NRT, resp.) adapted for executing a real-time capable and a non real-time capable operating system .

17. Apparatus according to claim 16, **characterised in that** the real-time capable areas (RT) of the control units (2.1-2.4) are designed for processing motion-relevant control signals which are immediately suited for a motion control of the respective manipulators (1.1-1.4).

18. Apparatus according to claim 17, **characterised in that** the real-time capable areas (RT) of the control units (2.1-2.4) are connected via the first transmission device (3) and the non real-time capable areas (NRT) of the control units (2.1-2.4) via a second transmission device (3').

19. Apparatus according to one of claims 15 to 18, **characterised in that** at least one control unit (2.3) has a terminal device (2.3g) for displaying operating surfaces (BOF) of different control units (2.1, 2.2, 2.3, 2.4) in its non real-time capable area (NRT).

20. Apparatus according to one of claims 15 to 19, **characterised in that** at least one control unit (2.3) has a detection device (2.3e) for detecting a control unit (2.1-2.4) controlling the selected manipulators (1.1-1.4).

21. Apparatus according to claim 20, **characterised in that** the control unit (2.3) having the detection device (2.3e) has a path control device (2.3c) which can be acted upon by the detection device (2.3e) so that the motion-relevant control signals are transferable to the control unit (2.1-2.4) assigned to the selected manipulators (1.1-1.4) via the first transmission device (3).

22. Apparatus according to claims 19 and 21, **characterised in that** the motion-relevant control signals are transferable to the terminal device (2.3g) in parallel to a transmission to the assigned control unit (2.1-2.4).

23. Apparatus according to claim 19, **characterised in that** additional control signals which are generated by the operating device (6) and which are not immediately motion-relevant are exclusively transferable to the terminal device (2.3g).

24. Apparatus according to claims 18 and 19, **characterised in that** all control signals are communicable between the terminal device (2.3g) and an operating surface (BOF) of the assigned control unit (2.1-2.4) via the second transmission device (3').

25. Apparatus according to claim 15, **characterised in that** the operating device (6) is designed for visualising operating surfaces (BOF) of different control units (2.1-2.4).

26. Apparatus according to claim 15, **characterised by** a unique assignment between a displayed operating surface (BOF) and a selected manipulator (1.1-1.4).

27. Apparatus according to claim 26, **characterised in that** the displayed operating surface (BOF) has optically effective markings (M₁, M₂, M₃) substantially identical to the manipulator (1.1-1.4).

28. Apparatus according to one of claims 15 to 27, **characterised by** a safety transmission device (5) connecting the control units (2.1-2.4) of all manipulators (1.1-1.4) with each other.

29. Apparatus according to one of claims 15 to 28, **characterised in that** the control signals generated by the operating device (6) are only transferable to the assigned control unit (2.1-2.4) after an acknowledgment.

## Revendications

1. Procédé pour commander un certain nombre d'appareils de manipulation avec un certain nombre d'unités de commande associées aux appareils de manipulation, tel que chacune de ces unités commande au moins un appareil de manipulation, qu'un boîtier de commande accède à plusieurs unités de commande afin de commander les appareils de manipulation, que le boîtier de commande génère des signaux de commande relatifs aux mouvements qui sont directement aptes à commander les mouvements desdits appareils de manipulation, qu'une surface d'utilisation d'une unité de commande d'un appareil de manipulation sélectionné est présentée à l'aide du boîtier de commande, **caractérisé en ce que** les données d'image et les signaux de commande générés par le boîtier de commande sont transmis sur des canaux différents, et que la fonction et la destination des canaux sont contrôlées par un dispositif de surveillance.

2. Procédé selon la revendication 1, **caractérisé en ce que** les signaux de commande relatifs aux mouvements sont transmis via un premier dispositif de transmission à une partie de l'unité de commande associée qui est conçue pour le traitement en temps réel des signaux de commande relatifs aux mouvements.

3. Procédé selon une des revendications 1 à 2, **caractérisé en ce que** le boîtier de commande génère d'autres signaux de commande qui ne sont pas directement liés aux mouvements.

4. Procédé selon la revendication 3, **caractérisé en ce que** les autres signaux sont transmis exclusivement à un dispositif de type terminal conçu pour présenter des surfaces d'utilisation de différentes unités de commande et situé dans une partie de l'unité de commande qui n'est pas capable d'un traitement en temps réel.

5. Procédé selon une des revendications 3 à 4, **caractérisé en ce que** les autres signaux de commande sont transmis par un deuxième dispositif de transmission à une partie de l'unité de commande associée conçue pour traiter les données autrement qu'en temps réel.

6. Procédé selon la revendication 1, **caractérisé en ce que** la présentation est graphique, et que pour identifier les appareils de manipulation sélectionnés, un libellé désignant les appareils de manipulation est affiché sur le boîtier de commande ou bien que, pour identifier les appareils de manipulation sélectionnées, un marquage à effet optique présent sur l'appareil de manipulation est affiché sur la boîte de commande.

7. Procédé selon la revendication 6, **caractérisé en ce que** pour identifier les appareils de manipulation sélectionnés, un moyen de signalisation acoustique et/ou optique présent sur l'appareil de manipulation correspondant est activé.

8. Procédé selon une des revendication 6 à 7, **caractérisé en ce que** les images de l'unité de commande associée aux appareils de manipulation sont transmises dans un format numérique à la boîte de commande.

9. Procédé selon la revendication 8, **caractérisé en ce que** les données d'images sont compressées avant la transmission.

10. Procédé selon la revendication 8 ou 9, **caractérisé en ce que** des éléments d'images standards sont transmis comme instructions de commande et affichés de façon autonome par le boîtier de commande.

11. Procédé selon une des revendications 6 à 10, **caractérisé en ce que** les images sont transmises sous forme de données de pixels.

12. Procédé selon une des revendications 1 à 11, **caractérisé en ce que** la transmission des signaux relatifs aux mouvements est contrôlée par un premier dispositif de surveillance, et qu'en cas d'interruption de la transmission, le dispositif de surveillance génère un signal de commande relatif aux mouvements.

13. Procédé selon une des revendications 1 à 12, **caractérisé en ce que** l'appareil de manipulation, associé par l'intermédiaire de l'unité de commande sélectionnée au boîtier de commande, est indiqué par un moyen de signalisation optique et/ou acoustique.

14. Procédé selon la revendication 13, **caractérisé en ce que** l'aptitude au bon fonctionnement du moyen de signalisation est surveillée par un dispositif de surveillance.

15. Dispositif pour commander un certain nombre d'appareils de manipulation comprenant un certain nombre d'unités de commande associées audits appareils de manipulation, tel que chacune de ces unités commande au moins un appareil de manipulation, et un boîtier de commande commun, capable d'être relié à au moins une unité de commande définie, afin de commander les appareils de manipulation (1.1, 1.2, 1.3, 1.4), où le boîtier de commande (6) est conçu pour générer les signaux de commande relatifs aux mouvements capables de commander directement les mouvements des appareils de manipulation correspondants, ainsi qu'un dispositif d'affichage (6.1) pour présenter les surfaces d'utilisation (BOF) de différentes unités de commande (2.1 - 2.4), **caractérisé en ce que** les signaux d'affichage et de commande peuvent être transmis entre les unités de commande (2.1 - 2.4) et le boîtier de commande (6) sur des canaux de données séparés, et qu'il existe un dispositif de surveillance (3") conçu pour la surveillance d'une fonction et d'un lieu d'arrivée des canaux de données.

16. Dispositif selon la revendication 15, **caractérisé en ce que** les unités de commande (2.1, 2.2, 2.3, 2.4) sont divisées en parties distinctes de traitement des données par un système d'exploitation capable d'un traitement en temps réel et par un système d'exploitation non capable d'un traitement en temps réel (RT et NRT).

17. Dispositif selon la revendication 16, **caractérisé en ce que** les parties capables de traitement en temps réel (RT) des unités de commande (2.1 - 2.4) sont conçues pour traiter les signaux de commande relatifs aux mouvements, directement aptes à commander les mouvements des appareils de manipulation (1.1 - 1.4) concernés.

18. Dispositif selon la revendication 17, **caractérisé en ce que** la liaison des parties capables de traitement en temps réel (RT) des unités de commande (2.1 - 2.4) passe par un premier dispositif de transmission (3) et celle des parties non capables de traitement en temps réel (NRT) des unités de commande (2.1 - 2.4) par un deuxième dispositif de transmission (3').

19. Dispositif selon une des revendications 15 à 18, **caractérisé en ce qu'**au moins une unité de commande (2.3) possède dans sa partie non capable de traitement en temps réel (NRT) un dispositif de type terminal (2.3g) pour afficher les surfaces d'utilisation (BOF) de différentes unités de commande (2.1, 2.2, 2.3, 2.4).

20. Dispositif selon une des revendications 15 à 19, **caractérisé en ce qu'**au moins une unité de commande (2.3) possède un dispositif de détection (2.3e) pour reconnaître une unité de commande (2.1 - 2.4) qui commande les appareils de manipulation sélectionnés (1.1 - 1.4).

21. Dispositif selon la revendication 20, **caractérisé en ce que** l'unité de commande (2.3) comprenant le dispositif de détection (2.3e) possède un dispositif de commande de suivi de trajectoire (2.3c) sur lequel le dispositif de détection (2.3e) peut agir de façon à ce que les signaux de commande relatifs aux mouvements puissent être transmis par le premier dispositif de transmission (3) à l'unité de commande (2.1 - 2.4) associée aux appareils de manipulations (1.1 - 1.4) sélectionnés.

22. Dispositif selon les revendications 19 et 21, **caractérisé en ce que** les signaux de commande relatifs aux mouvements peuvent être transmis au dispositif de type terminal (2.3g) simultanément à une transmission à l'unité de commande (2.1 - 2.4) associé.

23. Dispositif selon la revendication 19, **caractérisé en ce que** d'autres signaux de commande générés par le boîtier de commande (6) qui ne sont pas directement relatifs aux mouvements, peuvent être transmis exclusivement au dispositif de type terminal (2.3g).

24. Dispositif selon la revendication 18 et 19, **caractérisé en ce que** tous les signaux de commande peuvent être transmis via le deuxième dispositif de transmission (3') entre le dispositif de type terminal (2.3g) et une surface d'utilisation (BOF) de l'unité de commande (2.1 - 2.4) associée.

25. Dispositif selon la revendication 15, **caractérisé en ce que** le boîtier de commande (6) est conçu pour visualiser des surfaces d'utilisation (BOF) de différentes unités de commande (2.1 - 2.4).

26. Dispositif selon la revendication 15, **caractérisé en ce qu'**il existe une association univoque entre la surface d'utilisation (BOF) et un appareil de manipulation (1.1 - 1.4) sélectionné.

27. Dispositif selon la revendication 26, **caractérisé en ce que** la surface d'utilisation (BOF) affichée présente des marquages (M₁, M₂, M₃) à effet optique qui sont essentiellement identiques à ceux de l'appareil de manipulation (1.1 - 1.4).

28. Dispositif selon une des revendications 15 à 27, **caractérisé par** un dispositif de transmission de sécurité (5) qui relie entre elles l'ensemble des unités de commande (2.1 - 2.4) de tous les appareils de manipulation (1.1 - 1.4).

29. Dispositif selon une des revendications 15 à 28, **caractérisé en ce que** les signaux de commande générés par le boîtier de commande (6) ne peuvent être transmis à l'unité de commande (2.1 - 2.4) associée qu'après une validation.
